# EUROPÄISCHE PATENTSCHRIFT

(11) **EP 3 743 261 B1**
(45) Veröffentlichungstag und Bekanntmachung des Hinweises auf die Patenterteilung: **19.03.2025**
(21) Anmeldenummer: 19717863.5
(22) Anmeldetag: 11.04.2019
(51) Int. Cl.: B29C 64/153, B29C 64/393, B33Y 10/00, B33Y 50/02, B22F 10/85, B22F 12/90, B22F 10/28

(54) **VERFAHREN UND VORRICHTUNG ZUR VERBESSERUNG DER BAUTEILQUALITÄT VON DURCH EIN ADDITIVES HERSTELLVERFAHREN HERGESTELLTEN OBJEKTEN**
METHOD AND DEVICE FOR IMPROVING THE COMPONENT QUALITY OF OBJECTS MANUFACTURED USING AN ADDITIVE MANUFACTURING METHOD
PROCÉDÉ ET DISPOSITIF PERMETTANT D'AMÉLIORER LA QUALITÉ DE CONSTRUCTION D'OBJETS FABRIQUÉS PAR UN PROCÉDÉ DE FABRICATION ADDITIVE

(30) Priorität: 13.04.2018 DE 102018205688
(43) Veröffentlichungstag der Anmeldung: 02.12.2020
(73) Patentinhaber: EOS GmbH Electro Optical Systems, 82152 Krailling (DE)
(72) Erfinder: HAMANN, Jörg, 85053 Ingolstadt (DE); HOLFELDER, Peter, 85375 Neufahrn bei Freising (DE); HÜMMELER, Ludger, 82131 Gauting (DE); WALTER, Manuel, 80686 München (DE)
(74) Vertreter: Prüfer & Partner mbB Patentanwälte · Rechtsanwälte
(86) Internationale Anmeldenummer: PCT/EP2019/059314
(87) Internationale Veröffentlichungsnummer: WO 2019/197558

(56) Entgegenhaltungen:
- EP-A1- 0 821 647
- EP-A1- 2 667 987
- EP-A1- 2 893 994
- EP-A1- 3 083 203
- DE-A1- 102013 011 675
- DE-A1- 102015 223 446
- US-A- 6 085 122
- US-A1- 2004 182 836
- US-A1- 2017 320 168
- HO YEUNG ET AL: "LASER PATH PLANNING AND POWER CONTROL STRATEGIES FOR POWDER BED FUSION SYSTEMS Measurement Science for Additive Manufacturing View project Sensor-Based Build Condition Monitoring in Laser Powder Bed Fusion Additive Manufacturing Process Using a Spectral Graph Theoretic Approach View project", 1 August 2016 (2016-08-01), XP055492295, Retrieved from the Internet <URL:https://www.researchgate.net/profile/Brandon_Lane/publication/310152847_LASER_PATH_PLANNING_AND_POWER_CONTROL_STRATEGIES_FOR_POWDER_BED_FUSION_SYSTEMS/links/5829bb6108ae911e2a32701b/LASER-PATH-PLANNING-AND-POWER-CONTROL-STRATEGIES-FOR-POWDER-BED-FUSION-SYSTEMS.pdf?origin=publication_detail> [retrieved on 20180712]

## Beschreibung

Die vorliegende Anmeldung betrifft ein Verfahren und eine Vorrichtung zur Bereitstellung von Steuerdaten für eine additive Herstellvorrichtung, ein entsprechend angepasstes additives Herstellverfahren, eine entsprechende Vorrichtung zur Ansteuerung von Energieeintragseinrichtungen einer additiven Herstellvorrichtung, eine entsprechend angepasste additive Herstellvorrichtung und ein entsprechend angepasstes Computerprogramm. Insbesondere soll dabei die Bauteilqualität der hergestellten Objekte verbessert werden.

Auf dem Gebiet des Laserstrahlschweißens ist es bekannt, dass am Ende einer Schweißbahn an der Stelle, an der der Laserstrahl abgeschaltet wird, ein Krater entstehen kann (siehe beispielsweise US 2004/0182836 A1). Der Krater kann dabei zu einer verringerten Stabilität, also einem schlechteren Aneinanderhaften der beiden miteinander verschweißten Teile führen. Die vorliegende Erfindung widmet sich dem Problem, dass es auch auf dem Gebiet des selektiven Lasersinterns oder - schmelzens zu einer nachteiligen Beeinflussung der Struktur eines hergestellten Objekts kommen kann, wenn der Laserstrahl abrupt abgeschaltet wird. Dieses Verhalten ist erstaunlich und nicht ganz verstanden, zumal beim Laserstrahlsintern oder - schmelzen ein vollkommen anderer Prozess vorliegt als beim Laserstrahlschweißen.

Während es beim Laserstrahlschweißen in der Regel darum geht, zwei Metallbleche miteinander zu verbinden, geht es beim selektiven Lasersintern oder selektiven Laserschmelzen darum, ein pulverförmiges Material durch sukzessives Aufschmelzen von Materialschichten in einen Festkörper umzuwandeln. Während beim Laserstrahlschweißen der Krater der Theorie nach dadurch entsteht, dass das aufgeschmolzene Material so schnell abkühlt, dass die Schmelze den Krater nicht mehr füllen kann, sollte beim selektiven Laserstrahlsintern oder Laserstrahlschmelzen das Problem nicht vorhanden sein, da ein beim Aufschmelzen einer Schicht entstandener Krater durch den Auftrag der nachfolgenden Schicht pulverförmigen Materials aufgefüllt wird. Der beim selektiven Laserstrahlsintern oder Laserstrahlschmelzen häufig verwendete Tiefschweißprozess erzeugt in der Regel eine Tiefenerstreckung des durch einen Laserstrahl erzeugten Schmelzbades, die größer ist als die Tiefenerstreckung ("Schichtdicke") der zuletzt aufgetragenen Pulverschicht, beispielsweise doppelt oder dreimal so groß. Eine Anzahl unter der aktuell selektiv zu verfestigenden Schicht angeordneter, bereits selektiv verfestigter Schichten wird also mindestens teilweise erneut aufgeschmolzen, sodass ein etwaiger Krater in der unmittelbar darunter liegenden Schicht nicht nur mit Vollmaterial (erstarrter Schmelze) aufgefüllt werden kann, sondern das Gefüge neu gebildet werden kann.

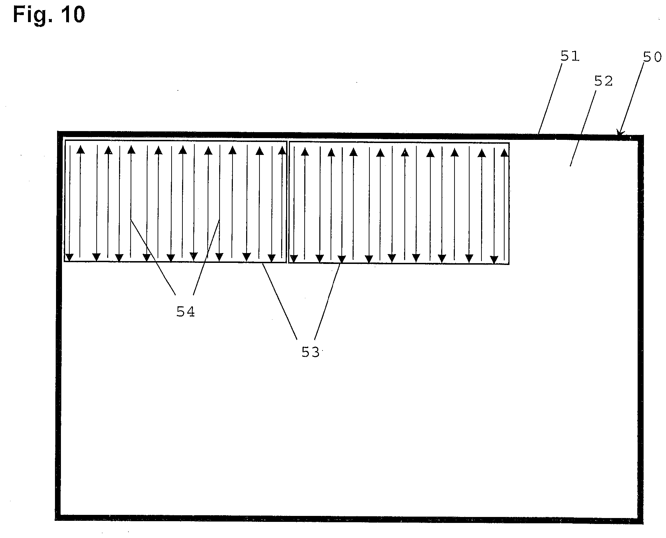

Fig. 10 zeigt das übliche Vorgehen bei der additiven Herstellung von Objekten mittels Bestrahlens desselben mit elektromagnetischer Strahlung oder Teilchenstrahlung (z. B. Lasersintern (SLS oder DMLS) oder Laserschmelzen oder Elektronenstrahlschmelzen). In Fig. 10 ist ein Objektquerschnitt 50 in einen Innenbereich bzw. Kernbereich 52 und einen Konturbereich 51 unterteilt, wobei in der Regel dem Konturbereich 51 andere Parameter für den Energieeintrag in das Aufbaumaterial zugewiesen werden als dem Innenbereich 52. Beispielsweise wird der Konturbereich 51 mit einem Laserstrahl als Beispiel für ein Strahlbündel dergestalt abgetastet, dass der Laserstrahl entlang des Verlaufs der Kontur verfahren wird. Der Innenbereich 52 wird üblicherweise dergestalt verfestigt, dass der Innenbereich 52 in Teilbereiche 53 unterteilt wird, die üblicherweise eine annähernd rechteckige oder quadratische Gestalt haben. Der Innenbereich 52 wird dann Teilbereich für Teilbereich mit dem Laserstrahl abgetastet.

Wie in Fig. 10 gezeigt, wird in jedem Teilbereich 53 der Laserstrahl in parallelen Bahnen (Scanlinien) 54 über das Aufbaumaterial bewegt, wodurch ein schraffurartiges Bewegungsmuster beim Abtasten jedes Teilbereichs 53 mit dem Laserstrahl resultiert. In Fig. 10 ist dabei die Bewegungsrichtung des Laserstrahls durch Pfeile veranschaulicht. Man erkennt, dass die Bewegungsrichtungen für benachbarte Scanlinien 54 einander entgegengesetzt sind.

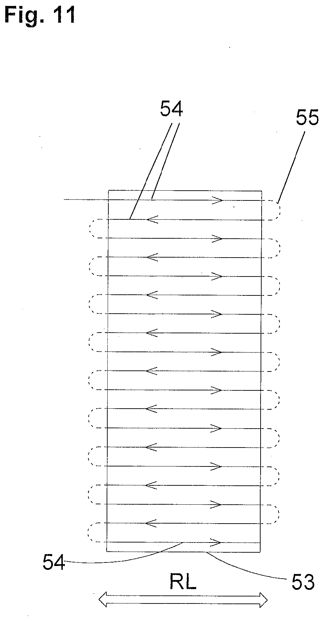

Fig. 11 veranschaulicht, wie solch ein Bewegungsmuster des Laserstrahls erzielt werden kann. Der Laserstrahl tritt in Fig. 11 links oben in den Bereich 53 ein und tastet das Aufbaumaterial im Bereich 53 entlang der obersten Scanlinie 54 ab. Am Ende der Scanlinie, also wenn der Laserstrahl am Rand des Teilbereichs 53 angekommen ist, wird der Laserstrahl abgeschaltet und ohne Strahlungszufuhr zum Aufbaumaterial die Bewegungsrichtung des Laserstrahls innerhalb des Umkehrbereichs 55 verändert, so dass danach der Laserstrahl entlang der zweitobersten Scanlinie 54 in entgegengesetzter Bewegungsrichtung über das Aufbaumaterial im Teilbereich 53 bewegt werden kann. Diesem Bewegungsmuster folgend wird dann der gesamte Teilbereich 53 abgetastet, wie es in Fig. 11 veranschaulicht ist.

Obwohl für den Erhalt von homogenen gleichförmigen Bauteilen in der Regel in der soeben geschilderten Weise vorgegangen wird, haben die Erfinder festgestellt, dass es bei dem geschilderten Vorgehen dennoch zu Bauteilinhomogenitäten bei den Umkehrbereichen 55 kommen kann.

WO 2015/091875 A1 beschreibt ein Verfahren zum Herstellen dreidimensionaler Objekte, bei dem die Scangeschwindigkeit eines zum Verfestigen dienenden Strahls außerhalb des zu verfestigenden Bereichs erhöht ist.

H. Yeung et al., Laser Path Planning and Power Control Strategies for Powder Bed Fusion Systems, Proceedings of the 27th International Solid Freeform Fabrication Symposium 2016, pages 113-127 beschreibt ein Verfahren zum Herstellen dreidimensionaler Objekte, bei dem eine Laserleistung basierend auf der Nähe zu bereits verfestigten Bereichen eingestellt werden kann, um dort eine zu starke Erwärmung zu vermeiden.

Die Aufgabe der vorliegenden Erfindung besteht daher darin, ein Verfahren und eine Vorrichtung bereitzustellen, mittels derer die Bauteilhomogenität von durch ein additives Herstellverfahren hergestellten Objekten verbessert werden kann.

Die Aufgabe wird gelöst durch ein computergestütztes Verfahren nach Anspruch 1, ein additives Herstellverfahren nach Anspruch 11, eine Vorrichtung zur Bereitstellung von Steuerdaten nach Anspruch 12, eine Vorrichtung nach Anspruch 13, eine additive Herstellvorrichtung nach Anspruch 14 und ein Computerprogramm nach Anspruch 15. Weiterbildungen der Erfindung werden in den abhängigen Ansprüchen beansprucht.

Insbesondere kann eine erfindungsgemäße Vorrichtung auch durch untenstehende bzw. in den abhängigen Ansprüchen ausgeführte Merkmale der erfindungsgemäßen Verfahren weitergebildet sein und umgekehrt. Ferner können die im Zusammenhang mit einer erfindungsgemäßen Vorrichtung beschriebenen Merkmale auch zur Weiterbildung einer anderen erfindungsgemäßen Vorrichtung benutzt werden, selbst wenn dies nicht explizit angegeben wird.

Ein erfindungsgemäßes computergestütztes Verfahren zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparameterwerten entlang einer Anzahl von Verfestigungsbahnen abgetastet werden, weist auf:
einen ersten Schritt des Zugriffs auf computerbasierte Modelldaten zumindest eines Abschnitts des herzustellenden Objekts,
einen zweiten Schritt des Erzeugens zumindest eines Datenmodells eines zur Herstellung des zumindest einen Objektabschnitts selektiv zu verfestigenden Bereichs einer Aufbaumaterialschicht, wobei in dem Datenmodell ein Verfestigen des Aufbaumaterials durch Bewegen zumindest eines Strahlbündels entlang zumindest einer Verfestigungsbahn spezifiziert ist
wobei für den Endpunkt der zumindest einen Verfestigungsbahn ein Satz von Energieeintragsparameterwerten spezifiziert wird, der einen Referenzwert für die Strahlungsleistung pro Flächeneinheit im Strahlungseinwirkbereich des Strahlbündels auf dem Aufbaumaterial bewirkt, welcher geringer ist als der Referenzwert für die Strahlungsleistung pro Flächeneinheit an anderen Stellen der Verfestigungsbahn, und
einen dritten Schritt, in dem Steuerdaten entsprechend dem im zweiten Schritt erzeugten zumindest einen Datenmodell für die Generierung eines Steuerdatensatzes für die additive Herstellvorrichtung bereitgestellt werden.

Additive Herstellvorrichtungen und -verfahren, auf die sich die vorliegende Erfindung bezieht, sind insbesondere solche, bei denen Energie als elektromagnetische Strahlung oder Teilchenstrahlung selektiv einer Schicht des Aufbaumaterials zugeführt wird. Die Arbeitsebene ist dabei eine Ebene, in der die Oberseite der Schicht liegt, welcher die Energie zugeführt wird. Hierbei kann die Energieeintragseinrichtung beispielsweise einen Laser oder eine Elektronenstrahlquelle aufweisen. Insbesondere bezieht sich die Erfindung auf Verfahren und Vorrichtungen, bei denen dem Aufbaumaterial mittels Strahlung Wärme zugeführt wird, wie z. B. das Lasersintern oder Laserschmelzen bzw. Elektronenstrahlschmelzen.

Von besonderem Vorteil ist eine Anwendung der Erfindung in Zusammenhang mit additiven Herstellverfahren und -vorrichtungen, bei denen ein metallenes oder zumindest metallhaltiges Aufbaumaterial verwendet wird, beispielsweise ein Metallpulver oder Metalllegierungspulver.

Es sei an dieser Stelle auch bemerkt, dass mittels einer erfindungsgemäßen additiven Herstellvorrichtung nicht nur ein Objekt, sondern auch mehrere Objekte gleichzeitig hergestellt werden können. Wenn in der vorliegenden Anmeldung von der Herstellung eines Objekts die Rede ist, dann versteht es sich, dass die jeweilige Beschreibung in gleicher Weise auch auf additive Herstellverfahren und -vorrichtungen anwendbar ist, bei denen mehrere Objekte gleichzeitig hergestellt werden.

Als Steuerdatensatz (oft auch als Steuerbefehlssatz bezeichnet) wird hier eine Abfolge von Anweisungen angesehen, Schichten des Aufbaumaterials nacheinander aufzutragen und Bereiche der jeweiligen Schichten, die dem Querschnitt eines herzustellenden Objektes entsprechen, mit Strahlung abzutasten, um das Aufbaumaterial zu verfestigen.

Im Detail basiert ein Steuerdatensatz auf einem computerbasierten Modell des oder der herzustellenden Objekte, bevorzugt einem CAD-Modell. Der Steuerdatensatz legt für jede Schicht während der Herstellung die Stellen, an denen durch Strahlungszufuhr eine Verfestigung des Aufbaumaterials bewirkt werden soll, fest und optional die Dicke der Schicht. Des Weiteren enthält ein Steuerdatensatz oftmals auch herstellvorrichtungsspezifische Informationen, beispielsweise bezüglich der Lage und Orientierung der Objekte in der additiven Herstellvorrichtung oder aber bezüglich eines Durchmessers eines Strahlungseinwirkbereichs eines Strahl(bündel)s beim Auftreffen auf das Aufbaumaterial. In der Regel enthält der Steuerdatensatz dabei alle zur Steuerung der Energieeintragseinrichtung erforderlichen Daten, wodurch u. a. die Energiedichte der Strahlung, also die Energie pro Flächeneinheit, und/oder die Verfahrgeschwindigkeit des Strahlbündels über das Aufbaumaterial und/oder ein Bestrahlungsmuster festgelegt werden. Hier wird der Begriff "Strahlbündel" anstelle von "Strahl" verwendet, um zum Ausdruck zu bringen, dass der Durchmesser des Strahlungseinwirkbereichs auf dem Aufbaumaterial nicht notwendigerweise sehr klein sein muss, sondern auch eine größere Fläche einnehmen kann, insbesondere wenn die Strahlung schräg auf das Aufbaumaterial auftrifft oder aber Strahlung verwendet wird, die beim Auftreffen auf das Aufbaumaterial bewusst einen größeren Flächenbereich abdecken soll (beispielsweise wenn ein Zeilenbelichter zum Einsatz kommt).

Der Steuerdatensatz kann somit als Gesamtheit aller für die Steuerung des Herstellungsvorgangs in einer additiven Herstellvorrichtung vorgegebenen Steuerdaten angesehen werden. Die auf eine einzelne Schicht bezogenen Steuerdaten werden dabei im Folgenden auch als Schichtdatensatz bezeichnet. In der vorliegenden Anmeldung wird insbesondere angenommen, dass ein Schichtdatensatz ein Datenmodell von während des Herstellungsverfahrens zu verfestigenden Stellen eines Objektquerschnitts enthält. Solch ein Datenmodell wird in der Regel durch Zerlegen eines CAD-Modells des herzustellenden Objekts in Schichten (im Fachjargon als Slicing bezeichnet) erzeugt. Es ist aber auch denkbar, eine zweidimensionale Repräsentation des in einer Schicht mittels eines oder mehrerer Strahlenbündel zu verfestigenden Objektquerschnitts auf anderweitige Weise aus dem computerbasierten CAD-Modell des Objekts zu extrahieren. In dem Schichtdatensatz sind einem Objektquerschnitt entsprechende Stellen, die in der zugehörigen Aufbaumaterialschicht zu verfestigen sind, spezifiziert. Darüber hinaus können noch weitere Informationen hinsichtlich der Herstellung des Objektquerschnitts enthalten sein, insbesondere die zeitliche Reihenfolge, in der einem Objektquerschnitt entsprechende Stellen zu verfestigen sind, also eine Scanlinie bzw. eine Abtastspur, entlang derer verfestigt werden soll, oder z. B. die Schichtdicke oder Bestrahlungsparameterwerte, wie beispielsweise der Durchmesser oder die Verfahrgeschwindigkeit eines Strahlungseinwirkbereichs eines auf das Aufbaumaterial auftreffenden Strahlbündels, etc. Es sei betont, dass es auch Sonderfälle gibt, in denen sich ein Schichtdatensatz nicht auf einen kompletten Objektquerschnitt bezieht, sondern nur auf einen Teil desselben.

Bei den computerbasierten Modelldaten kann es sich beispielsweise um ein Modell des herzustellenden Objektabschnitts handeln, das z. B. als CAD-Modell oder konvertiert in das STL-Format vorliegt, und noch keine Informationen über die Zerlegung in Schichten für eine schichtweise Herstellung enthält. Denkbar ist auch ein Vorliegen der Modelldaten in einer GML (Generative Modelling Language)-Beschreibung. Alternativ kann es sich dabei um eine Anzahl von Schichtdatensätzen handeln, von denen jeder ein Datenmodell eines während der Herstellung selektiv zu verfestigenden Bereichs einer Aufbaumaterialschicht aufweist, der einem Querschnitt des Objektabschnitts entspricht. An dieser Stelle sei vermerkt, dass in der vorliegenden Anmeldung der Begriff "Anzahl" stets im Sinne von "ein oder mehrere" zu verstehen ist. Ferner sei bemerkt, dass der Objektabschnitt sich nicht notwendigerweise nur auf einen Teil des herzustellenden Objekts beziehen muss, sondern auch das ganze herzustellende Objekt umfassen kann.

Ein Zugriff auf die Modelldaten kann so aussehen, dass die Modelldaten aus einem Speicher ausgelesen werden oder aber über ein Netzwerk entgegengenommen werden. Dabei müssen die Modelldaten des gesamten Objektabschnitts nicht zwangsläufig auf einmal eingelesen werden. Es ist auch möglich, dass es einen größeren zeitlichen Abstand zwischen den Zugriffsvorgängen auf Teile der Modelldaten gibt, beispielsweise Teile der Modelldaten jeweils bei Bedarf während eines Herstellungsvorgangs des Objektabschnitts aus einem Speicher (auf den z. B. auch von Seiten der additiven Herstellvorrichtung aus zugegriffen werden kann) oder über ein Netzwerk eingelesen werden und ein erzeugtes Datenmodell dann während des Herstellungsvorgangs in den Steuerdatensatz integriert wird. Eine additive Herstellvorrichtung kann also unter Zugrundelegung des erfindungsgemäßen Verfahrens den Steuerdatensatz für ihre Ansteuerung selbst abändern.

Wenn die Modelldaten, auf die im ersten Schritt zugegriffen wird, bereits eine Anzahl von Schichtdatensätzen aufweisen, dann kann die Erzeugung zumindest eines Datenmodells im zweiten Schritt in der Abänderung eines bereits in den Modelldaten vorhandenen Datenmodells einer Aufbaumaterialschicht bestehen. Andernfalls kann ein Datenmodell einer Aufbaumaterialschicht (bzw. eines Teils davon) erstmalig im zweiten Schritt erzeugt werden.

Eine Verfestigungsbahn entspricht einer Strecke in der Arbeitsebene, entlang derer das Aufbaumaterial ohne zeitliche und örtliche Unterbrechungen, d. h. in einem Zug oder, mit anderen Worten, durch kontinuierliche Verlagerung des Schmelzbades in einer Richtung parallel zur Bauebene, verfestigt werden soll. Insbesondere kann man also Verfestigungsbahnen als jene Scanlinien(abschnitte) ansehen, bei denen beim Abtasten des Aufbaumaterials durch das zumindest eine Strahlbündel tatsächlich eine Verfestigung desselben und nicht lediglich eine Erwärmung desselben bewirkt wird. Eine Verfestigungsbahn kann z. B. eine gerade Strecke einer gewissen Breite sein, entlang derer durch das Abtasten mit einem Strahlungseinwirkbereich das Aufbaumaterial verfestigt wird. Es gibt aber auch Fälle, in denen beim Bewegen eines Strahlungseinwirkbereichs entlang der Verfestigungsbahn ein oder mehrere Richtungsänderungen stattfinden, insbesondere die Verfestigungsbahn geometrisch als gekrümmte Linie einer gewissen Breite vorliegt.

In dem im zweiten Schritt erzeugten Datenmodell werden die Energieeintragsparameterwerte für den Strahlungseinwirkbereich jenes zumindest einen Strahlbündels spezifiziert, dessen Einwirkung auf das Aufbaumaterial eine Verfestigung zumindest einer obersten Schicht des Aufbaumaterials bewirkt, das also das Aufbaumaterial nicht lediglich vorerwärmt oder nacherwärmt.

Bevorzugt wird zum Verfestigen des Aufbaumaterials entlang einer Verfestigungsbahn genau ein Strahlbündel verwendet. Infolge der Energiezufuhr durch das Strahlbündel beim Abtasten des Aufbaumaterials wird letzteres teilweise oder vollständig aufgeschmolzen, wodurch sich die Bestandteile des Aufbaumaterials (beispielsweise Pulverkörner) miteinander verbinden. Nach seiner Abkühlung liegt das Aufbaumaterial dann als Festkörper vor.

Es sei erwähnt, dass es Aufbaumaterialien, wie z. B. Legierungen, geben kann, für die kein eindeutiger Schmelzpunkt, sondern ein Schmelzintervall definiert ist. Im Prinzip kann man in solch einem Fall bereits bei einer Überschreitung der Solidustemperatur, also der unteren Grenze des Schmelzintervalls, von einem teilweisen Aufschmelzen sprechen. Bevorzugt lässt sich die vorliegende Erfindung aber auf Fälle anwenden, in denen das Aufbaumaterial vollständig aufgeschmolzen wird, also die Liquidustemperatur bzw. die obere Grenze des Schmelzintervalls überschritten wird.

Da die Übergänge zwischen teilweisem (bei Pulverkörnern also oberflächlichem) Aufschmelzen (Flüssigphasensintern) und vollständigem Aufschmelzen (Schmelzen) fließend sind, werden die Begriffe Sintern und Schmelzen in der vorliegenden Anmeldung synonym verwendet und nicht zwischen Sintern und Schmelzen unterschieden.

Im Falle der Verfestigung des Aufbaumaterials entlang einer Verfestigungsbahn unter Verwendung von mehr als einem Strahlbündel wird durch die gemeinschaftliche Einwirkung mehrerer Strahlbündel das Aufbaumaterial teilweise oder vollständig aufgeschmolzen, wodurch sich die Bestandteile des Aufbaumaterials (beispielsweise Pulverkörner) miteinander verbinden. Auch hierbei erfolgt eine Verfestigung des Aufbaumaterials entlang der Verfestigungsbahn ohne zeitliche Unterbrechungen, d. h. in einem Zug. Beispielsweise könnte bei Verwendung von zwei Strahlbündeln zunächst eines der Strahlbündel einen Anfangsabschnitt der Verfestigungsbahn alleine verfestigen und das andere Strahlbündel erst in einiger Entfernung vom Anfangspunkt dazugeschaltet werden. Die beiden Strahlbündel würden dann für eine gewisse Strecke der Verfestigungsbahn zeitgleich Energie in das Aufbaubaumaterial eintragen, wobei sich ihre Auftreffbereiche zumindest teilweise überschneiden. In einiger Entfernung vom Endpunkt könnte dann das zweite Strahlbündel wieder weggeschaltet werden, so dass der Endabschnitt dann wieder nur durch das erste Strahlbündel verfestigt würde.

Das Vorgehen ist ein Beispiel einer besonderen Ausführungsform der Erfindung, bei der durch den gemeinsamen Energieeintrag von zwei oder mehr Strahlbündeln im Mittelabschnitt einer Verfestigungsbahn sichergestellt wird, dass dort ein höherer Referenzwert der Strahlungsleistung dem Aufbaumaterial pro Flächeneinheit zugeführt wird. Beispielsweise könnte innerhalb des Mittelabschnitts ein konstanter Referenzwert der Strahlungsleistung pro Flächeneinheit spezifiziert werden, der höher als jener am Anfangs- bzw. Endpunkt ist, wo weniger Strahlbündel als im Mittelabschnitt bzw. lediglich ein Strahlbündel Energie eintragen. Unter dem Mittelabschnitt der Verfestigungsbahn wird dabei ein Abschnitt der Verfestigungsbahn verstanden, der bezogen auf die Richtung, in der die Verfestigungsbahn abgetastet wird, zwischen dem Anfangspunkt und dem Endpunkt der Verfestigungsbahn liegt.

Die Länge einer Verfestigungsbahn entspricht beispielsweise der Breite eines zu verfestigenden (häufig streifenförmigen oder rechteckigen) Teilbereichs eines Querschnitts des herzustellenden Objekts. Wird ein Objektquerschnitt mittels eines Strahlbündels in Form eines Schraffurmusters verfestigt, bezeichnet man solche Verfestigungsbahnen auch als "Hatchlinien". Insbesondere kann dabei die Länge einer Verfestigungsbahn auch dem Durchmesser des Objektquerschnitts in Richtung des Verlaufs der Hatchlinien entsprechen, wobei gegebenenfalls noch ungefähr die Breite einer den Querschnitt rahmenden Konturlinie von diesem Durchmesser abgezogen werden muss. Alternativ kann die Länge einer Verfestigungsbahn auch dem Abstand zwischen dem Rand eines zu verfestigenden (häufig rechteckigen oder quadratischen) Teilbereichs eines Objektquerschnitts und dem Rand des Objektquerschnitts bzw. der Konturlinie entsprechen.

Wenn von einem Anfangs- bzw. von einem Endpunkt einer Verfestigungsbahn die Rede ist, dann ist damit nicht ein Punkt ohne Ausdehnung gemeint, sondern ein Abschnitt am Anfang bzw. Ende einer Verfestigungsbahn, dessen Ausdehnung jenem Teilbereich des Auftreffbereichs eines Strahlbündels entspricht, innerhalb dessen eine Verfestigung bewirkt wird. Solch ein Teilbereich wird als Strahlungseinwirkbereich angesehen. Typischerweise werden zu bestrahlende Stellen des Aufbaumaterials in den Steuerdaten zur Ansteuerung des zumindest einen Strahlbündels als Punkte innerhalb eines Koordinatensystems kodiert, die zweidimensional (bezogen auf eine Schicht) und/oder dreidimensional (bezogen auf ein Bauvolumen der Herstellvorrichtung, d. h. auf eine Mehrzahl von Schichten) definiert sein können. Mit diesen Punkten kann jedoch eine Information über eine jeweilige Ausdehnung des Strahlungseinwirkbereichs des Strahlbündels verknüpft werden. In einem Datenraum zur Vorbereitung eines Herstellungsprozesses können ein Anfangs- und/oder ein Endpunkt einer Verfestigungsbahn also durchaus als mathematische Punkte vorliegen, in einem tatsächlichen Herstellungsprozess nicht. Die Richtung eines Abtastens bzw. Verfestigens der Verfestigungsbahn durch das zumindest eine Strahlbündel verläuft in der Regel vom Anfangs- zum Endpunkt.

Ein Strahlungseinwirkbereich eines Strahlbündels auf dem Aufbaumaterial kann als Bereich der Arbeitsebene angesehen werden, innerhalb dessen die auftreffende Strahlungsleistung pro Flächeneinheit größer als ein vorgegebener Prozentsatz der maximalen Strahlungsleistung pro Flächeneinheit ist, wobei bei Überschreiten des vorgegebenen Prozentsatzes der maximalen Strahlungsleistung pro Flächeneinheit eine Überschreitung einer Schmelztemperatur bzw. Solidus- und/oder Liquidustemperatur des Aufbaumaterials bewirkt wird. Innerhalb des Strahlungseinwirkbereichs kann dabei z.B. Laserstrahlung oder Teilchenstrahlung auf das Aufbaumaterial einwirken. Der vorgegebene Prozentsatz bzw. die Gestalt und Größe des Strahlungseinwirkbereichs können entweder durch vorangegangene Herstellvorgänge mit der additiven Herstellvorrichtung und/oder mit dem Aufbaumaterial oder aber im Rahmen von Vorversuchen, bei denen Testbestrahlungen durchgeführt werden, ermittelt werden.

Ein Strahlungseinwirkbereich auf dem Aufbaumaterial muss nicht notwendigerweise kreisförmig sein, sondern kann auch andere, z. B. ovale, Formen haben, insbesondere wenn die Strahlung schräg auf das Aufbaumaterial auftrifft oder aber Strahlung verwendet wird, die beim Auftreffen auf das Aufbaumaterial bewusst einen größeren Flächenbereich abdecken soll (beispielsweise, wenn ein Zeilenbelichter zum Einsatz kommt). Insbesondere kann eine Strahlungsleistung pro Flächeneinheit innerhalb des Strahlungseinwirkbereichs bewusst variiert werden.

Als Referenzwert der Strahlungsleistung pro Flächeneinheit im Strahlungseinwirkbereich kann beispielsweise die Ausgangsleistung der Strahlungsquelle, die zur Erzeugung des Strahlbündels dient (z. B. einer (Pump-)Laserquelle) während des Richtens des Strahlbündels auf den Strahlungseinwirkbereich dienen. Beispiele für weitere mögliche Referenzwerte sind die mittlere Strahlungsintensität im Strahlbündel, die maximale Strahlungsintensität im Strahlbündel, die Gesamtstrahlungsleistung im Strahlbündel, die integrale Strahlungsleistung pro Flächeneinheit im Strahlungsauftreffbereich oder eine aus verschiedenen radiometrischen Basisgrößen errechnete Größe.

Insbesondere wenn die Strahlungsleistung pro Flächeneinheit innerhalb des Strahlungseinwirkbereichs variiert, kann als Referenzwert auch die maximale Strahlungsleistung pro Flächeneinheit innerhalb des Strahlungseinwirkbereichs verwendet werden, da für jede lokale Verteilung der Strahlungsleistung pro Flächeneinheit ein Maximum bestimmt werden kann. Bei Vorliegen eines konstanten Werts der Strahlungsleistung pro Flächeneinheit innerhalb des Strahlungseinwirkbereichs wäre beispielsweise das Maximum der an jeder Stelle vorhandene Wert der Strahlungsleistung pro Flächeneinheit. Alternativ könnte beispielsweise ein Mittelwert der Strahlungsleistung pro Flächeneinheit innerhalb des Strahlungseinwirkbereichs als Referenzwert gewählt werden.

Was als Referenzwert für die Strahlungsleistung pro Flächeneinheit innerhalb des Strahlungseinwirkbereichs herangezogen wird, spielt für den Gedanken der vorliegenden Erfindung keine Rolle. Wichtig bei der Festlegung des Referenzwertes der Strahlungsleistung pro Flächeneinheit im Strahlungsauftreffbereich ist im Wesentlichen nur, dass der Referenzwert mit der Strahlungsleistung pro Flächeneinheit an einer Position innerhalb des Strahlungsauftreffbereichs positiv korreliert ist, also monoton mit der Strahlungsleistung pro Flächeneinheit im Strahlungsauftreffbereich anwächst.

Wenn einem Referenzwert für die Strahlungsleistung pro Flächeneinheit entsprechende Energieeintragsparameterwerte spezifiziert werden, so kann dies auf verschiedene Weisen geschehen. Zum einen kann es sich bei einem spezifizierten Energieeintragsparameter um den Referenzwert selbst handeln. Beispielsweise kann ein Wert der Ausgangsleistung der Strahlungsquelle, die zur Erzeugung des Strahlbündels dient (z. B. einer (Pump-)Laserquelle), vorgegeben werden. Ebenso ist es möglich, Werte von Energieeintragsparametern zu spezifizieren, bei denen es sich nicht um den Referenzwert handelt, die jedoch den Referenzwert beeinflussen. Ein Beispiel hierfür wäre die Vorgabe der lokalen Verteilung der Strahlungsintensität pro Flächeneinheit innerhalb des Strahlungseinwirkbereichs beispielsweise durch Vorgabe der Fokussierung, also der Lage des Fokus in einer Richtung senkrecht zur Bauebene.

Wie ein Referenzwert sich bei einer Änderung der Strahlungsleistung pro Flächeneinheit an einer Position im Strahlungsauftreffbereich ändert, kann für die additive Herstellvorrichtung, für die Steuerdaten bereitgestellt werden sollen, im Vorhinein ermittelt werden, z. B. durch Untersuchung eines Strahlprofils bzw. einer Intensitätsverteilung des Strahlbündels, durch unmittelbare Messung der Strahlungsleistung pro Flächeneinheit (z. B. mittels einer IR-Kamera oder mittels einem nahe der Bauebene angebrachten Sensor), etc. Falls der Zusammenhang zwischen Referenzwert und Strahlungsleistung pro Flächeneinheit bereits aus vorangegangenen Herstellvorgängen mit der verwendeten additiven Herstellvorrichtung und/oder dem verwendeten Aufbaumaterial bekannt ist, kann auch auf die genannten Voruntersuchungen verzichtet werden.

Beim Abtasten einer Verfestigungsbahn mit lediglich einem Strahlbündel wird man als Breite der Verfestigungsbahn die Ausdehnung des Strahlungseinwirkbereichs senkrecht zur Bewegungsrichtung des Strahlbündels definieren. Dort wo innerhalb einer Verfestigungsbahn mehrere Strahlbündel gemeinsam eine Verfestigung des Aufbaumaterials bewirken, kann je nach Vorgehen die Breite der Verfestigungsbahn durch die Schnittmenge der Ausdehnungen der Strahlungseinwirkbereiche senkrecht zur Bewegungsrichtung der Strahlbündel entlang der Verfestigungsbahn definiert sein. Alternativ kann auch das Strahlbündel mit der größten Ausdehnung des Strahlungseinwirkbereichs senkrecht zur Bewegungsrichtung des Strahlbündels entlang der Verfestigungsbahn die Breite der Verfestigungsbahn definieren.

Durch die Erfindung können Steuerdaten für eine additive Herstellung von Objekten mit verbesserter Homogenität in einer additiven Herstellvorrichtung bereitgestellt werden. Dies kann mit Bezug auf das Beispiel der Figur 11 wie folgt erklärt werden:
Während am Endpunkt einer Verfestigungsbahn eine Verfestigung des Aufbaumaterials stattfinden soll, soll im unmittelbar angrenzenden Umkehrbereich 55 keine Verfestigung stattfinden. Hierzu wird im Stand der Technik in den Umkehrbereichen 55 der Laserstrahl abgeschaltet. Dadurch kann es aber an einem Ende einer Verfestigungsbahn zu unerwünschten Inhomogenitäten im Objekt bzw. Bauteil kommen, deren Ursache in der abrupten Änderung der Laserparameter, insbesondere der Leistungsdichte, also der Strahlungsleistung pro Flächeneinheit, liegt. Durch die erfindungsgemäße Verringerung des Referenzwerts für die Strahlungsleistung pro Flächeneinheit am Endpunkt ist die Änderung der Leistungsdichte an diesen Stellen geringer, wodurch Temperaturinhomogenitäten verringert werden, die z. B. zu strukturellen Inhomogenitäten im Gefüge des fertiggestellten Objekts bzw. Bauteils führen können. Der an anderen Stellen der Verfestigungsbahn spezifizierte Referenzwert für die Strahlungsleistung pro Flächeneinheit ist höher als am Anfangs- und/oder Endpunkt. An diesen anderen Stellen muss nicht so große Rücksicht auf Temperaturinhomogenitäten genommen werden. Natürlich muss sich die Verringerung des Referenzwerts für die Strahlungsleistung pro Flächeneinheit nicht auf den Endpunkt beschränken, sondern kann auch noch weitere Stellen der Verfestigungsbahn, jedoch nicht alle Stellen derselben, umfassen.

Es sei noch bemerkt, dass die für die Generierung eines Steuerdatensatzes bereitgestellten Steuerdaten zum einen aus dem im zweiten Schritt erzeugten zumindest einen Datenmodell selbst bestehen können, zum anderen das zumindest eine Datenmodell aber auch entsprechend etwaigen Formatanforderungen für die Integration in den Steuerdatensatz noch aufbereitet werden kann.

Vorzugsweise ist der Referenzwert für die Strahlungsleistung pro Flächeneinheit im Strahlungseinwirkbereich auf dem Aufbaumaterial am Endpunkt einer Verfestigungsbahn kleiner oder gleich 50%, bevorzugt kleiner oder gleich 20%, noch bevorzugter kleiner oder gleich 10%, noch weiter bevorzugt kleiner oder gleich 5%, noch weiter bevorzugt maximal 3%, noch weiter bevorzugt maximal 2% des Referenzwertes für die Strahlungsleistung pro Flächeneinheit an den anderen Stellen der Verfestigungsbahn.

Je höher dabei die prozentualen Unterschiede sind, desto positiver kann sich dies auf die Objekthomogenität auswirken.

Weiter bevorzugt werden die Energieeintragsparameterwerte im Strahlungseinwirkbereich am Endpunkt einer Verfestigungsbahn so festgelegt, dass bei der Einwirkung der Strahlung auf das Aufbaumaterial ein Wärmeleitungsschweißprozess stattfindet, wobei an zumindest einer anderen Stelle der Verfestigungsbahn bei der Einwirkung der Strahlung auf das Aufbaumaterial ein Tiefschweißprozess stattfindet.

Als Tiefschweißprozess wird hier ein Vorgang angesehen, bei dem die durch die Strahlung in das Aufbaumaterial eingetragene Strahlungsleistung pro Flächeneinheit so hoch ist, dass es zu einer Verdampfung aller Hauptkomponenten des Aufbaumaterials kommt, wobei beispielsweise im Falle einer Verwendung dediziert nicht aufzuschmelzender Verstärkungspartikel oder Verstärkungsfasern diese nicht als Hauptkomponenten gelten. Infolge der Ausbildung einer Dampfkapillare an der Oberfläche des Aufbaumaterials dringt das Strahlbündel tiefer unter die Oberfläche der zu verfestigenden Schicht ein. Hierdurch kann es zu einer Mehrfachreflektion des Strahlbündels kommen, durch welche die Strahlungsabsorption verbessert wird.

Als Wärmeleitungsschweißprozess wird hier ein Vorgang angesehen, bei dem die durch die Strahlung in das Aufbaumaterial eingetragene Strahlungsleistung pro Flächeneinheit zu niedrig ist, um eine Verdampfung des Aufbaumaterials zu bewirken. Die Energie breitet sich über Wärmeleitung in das Aufbaumaterial aus, was zu einer geringeren Ausdehnung des durch die Strahlung erzeugten Schmelzbades senkrecht zur Oberfläche führt.

Die Erfinder haben festgestellt, dass es sich positiv auf die Objekthomogenität im Bereich des Endes der Verfestigungsbahn auswirkt, wenn am Ende der Verfestigungsbahn ein Übergang in einen Wärmeleitungsschweißprozess erfolgt. Sie erklären sich dies so, dass die bei einem Tiefschweißprozess vorliegende Materialverdampfung zu Kratern im verfestigten Aufbaumaterial führen kann. Insbesondere kann dies dann auftreten, wenn am Ende einer Verfestigungsbahn die Strahlungsleistung pro Flächeneinheit zu abrupt so stark verringert wird, dass die eingetragene Energie pro Flächeneinheit unter die zum Aufschmelzen des Aufbaumaterials notwendige Energie pro Flächeneinheit absinkt (beispielsweise durch Ausschalten des Strahlbündels). Infolge des raschen Erstarrungsvorgangs des geschmolzenen Aufbaumaterials kann im verfestigten Objekt die temporär gebildete Dampfkapillare, die auch als "Keyhole" bezeichnet wird, nicht mehr mit Material gefüllt werden.

Als Lösung wird daher vorgeschlagen, insbesondere am Endpunkt einer Verfestigungsbahn Energieeintragsparameterwerte zu spezifizieren, die beim Auftreffen der Strahlung auf das Aufbaumaterial einen Wärmeleitungsschweißvorgang bewirken. Welche Energieeintragsparameterwerte hierfür geeignet sind, kann im Rahmen von Vorversuchen für das zu verwendende Aufbaumaterial ermittelt worden sein. Bei den Vorversuchen können z. B. die Ausgangsleistung der Strahlungsquelle, die zur Erzeugung des Strahlbündels dient, die lokale Verteilung der Strahlungsintensität pro Flächeneinheit innerhalb des Strahlungseinwirkbereichs, die Bewegungsgeschwindigkeit des Strahlungseinwirkbereichs in der Arbeitsebene oder aber z. B. die Fokussierungstiefe der Strahlung bezüglich der Arbeitsebene variiert werden.

Die Untersuchung der Art des Schweißprozesses kann z. B. durch die Beobachtung des Strahlungseinwirkbereichs mittels einer Kamera (optisch, IR, UV), durch die Analyse der vom Strahlungseinwirkbereich emittierten Strahlung oder aber durch Analysen an während der Vorversuche hergestellten Testobjekten ermittelt werden. Als Kriterium für das Vorliegen eines Wärmeleitungsschweißprozesses kann das weitgehende Ausbleiben von Emissionen, die durch die beim Tiefschweißprozess erzeugte Dampfkapillare bedingt sind, also Spratzer bzw. Jets sowie Metalldampf verwendet werden. Ein weiteres Kriterium ist das Aspektverhältnis des Schmelzbades (Durchmesser des Schmelzbades parallel zur Arbeitsebene im Verhältnis zur Tiefe, d. h. senkrecht zur Arbeitsebene), welches beim Wärmeleitungsschweißen oberhalb von 1:1, im Optimalfall etwa bei 2:1, auf jeden Fall unterhalb von 100:1 liegt, oder/aber die Oberflächentemperatur des Aufbaumaterials. Wenn letztere unter dem Verdampfungspunkt einer bzw. aller Komponenten des Aufbaumaterials liegt, dann kann sich nicht das für den Tiefschweißprozess erforderliche "Keyhole" ausbilden.

Bevorzugt werden die Energieeintragsparameterwerte im Strahlungseinwirkbereich für einen Zeitraum unmittelbar vor dem Richten des Strahlbündels auf den Anfangspunkt der Verfestigungsbahn so spezifiziert, dass ein Referenzwert der Strahlungsleistung pro Flächeneinheit im Strahlungseinwirkbereich des Strahlbündels auf dem Aufbaumaterial maximal 50%, bevorzugt maximal 20%, weiter bevorzugt maximal 10%, noch weiter bevorzugt maximal 5%, noch weiter bevorzugt maximal 3%, noch weiter bevorzugt maximal 2% des Referenzwerts für die Strahlungsleistung pro Flächeneinheit am Anfangspunkt beträgt. Bevorzugt liegt die Strahlungsleistung pro Flächeneinheit vor dem Richten des Strahlbündels auf den Anfangspunkt unterhalb von 0,05 MW/cm².

Wie weiter oben erläutert wurde, erstreckt sich eine Verfestigungsbahn zwischen einem Anfangspunkt und einem Endpunkt. Mit dem soeben beschriebenen Vorgehen kann vermieden werden, dass an den Anfangspunkt angrenzende Stellen des Aufbaumaterials außerhalb der spezifizierten Verfestigungsbahn verfestigt werden, bevor ein Auftreffbereich des zumindest einen Strahlbündels den Anfangspunkt erreicht. Die Ränder des verfestigten Bereichs sollen in der Regel mit hoher Detailgenauigkeit ausgebildet werden, was mit einer präzisen Abgrenzung des verfestigten Bereichs gegenüber unverfestigtem oder zuvor verfestigtem Aufbaumaterial einhergeht. Mit dem beschriebenen Vorgehen ist es möglich, für eine deutliche Abgrenzung des verfestigten Bereichs gegenüber umliegendem unverfestigtem Aufbaumaterial zu sorgen, da der Unterschied in der pro Flächeneinheit eingetragenen Strahlungsleistung begrenzt ist. Bevorzugt wird außerhalb der Verfestigungsbahn (z. B. in den bereits erwähnten Umkehrbereichen) höchstens soviel Energie eingetragen, dass das Aufbaumaterial zwar erwärmt wird, aber keine Verfestigung bewirkt wird.

Insbesondere werden bevorzugt die Energieeintragsparameterwerte im Strahlungseinwirkbereich innerhalb eines an den Endpunkt angrenzenden Abschnitts der Verfestigungsbahn so festgelegt, dass bei der Einwirkung der Strahlung auf das Aufbaumaterial ein Wärmeleitungsschweißprozess stattfindet, wobei vorzugsweise eine maximale Ausdehnung des Abschnitts höchstens dem Zwanzigfachen der maximalen Ausdehnung des Strahlungseinwirkbereichs entspricht, weiter bevorzugt höchstens dem Zehnfachen, noch weiter bevorzugt höchstens dem Fünffachen, besonders bevorzugt höchstens dem Doppelten der maximalen Ausdehnung des Strahlungseinwirkbereichs entspricht.

Durch die Anwendung eines Wärmeleitungsschweißprozesses innerhalb eines an den Endpunkt angrenzenden Abschnitts der Verfestigungsbahn kann dafür gesorgt werden, dass bereits nahe dem Endpunkt Unregelmäßigkeiten im verfestigten Aufbaumaterial vermieden werden.

Bevorzugt wird für den Endpunkt und/oder einen an den Endpunkt angrenzenden Abschnitt der zumindest einen Verfestigungsbahn eine größere oder gleiche maximale Ausdehnung des Strahlungseinwirkbereichs senkrecht zur Bewegungsrichtung des Strahlbündels als an den anderen Stellen der Verfestigungsbahn spezifiziert und/oder eine andere Verteilung der Strahlungsintensität pro Flächeneinheit innerhalb des Strahlungseinwirkbereichs, insbesondere ein größerer Wert des Verhältnisses der Strahlungsleistung pro Flächeneinheit am Rande des Strahlungseinwirkbereichs zur Strahlungsleistung pro Flächeneinheit in der Mitte des Strahlungseinwirkbereichs spezifiziert als an den anderen Stellen der Verfestigungsbahn.

Ein Übergang zu einer geringeren Strahlungsleistung pro Flächeneinheit am Endpunkt der Verfestigungsbahn kann zu einer Änderung der Verfestigungsbreite führen. Dem kann durch die erwähnten Abänderungen entgegen gewirkt werden. Beispielsweise kann bei einer Verringerung der Strahlungsleistung pro Flächeneinheit gleichzeitig auch die Geschwindigkeit der Bewegung des Strahlungseinwirkbereichs über das Aufbaumaterial verringert werden und/oder die Fokussierungsebene des Strahlbündels relativ zur Arbeitsebene geändert werden. Weiterhin kann die Verteilung der Strahlungsintensität im Strahlbündel so gewählt werden, dass am Endpunkt und/oder in einem an den Endpunkt angrenzenden Abschnitt der Verfestigungsbahn ein größerer Wert des Verhältnisses der Strahlungsleistung pro Flächeneinheit am Rande des Strahlungseinwirkbereichs einerseits zur Strahlungsleistung pro Flächeneinheit in der Mitte des Strahlungseinwirkbereichs andererseits vorliegt als an anderen Stellen der Verfestigungsbahn. Die veränderte Verteilung der Strahlungsintensität pro Flächeneinheit muss aber nicht zwingend bedeuten, dass ein absoluter Wert der Strahlungsleistung pro Flächeneinheit am Rand höher ist als ein absoluter Wert der Strahlungsleistung pro Flächeneinheit in der Mitte.

Weiter bevorzugt führt am Endpunkt und/oder innerhalb eines an den Endpunkt angrenzenden Abschnitts der zumindest einen Verfestigungsbahn das Strahlbündel in der Arbeitsebene eine periodische oder unregelmäßige Bewegung einer Amplitude aus, die geringer als das Fünffache, vorzugsweise geringer als das Dreifache, besonders bevorzugt geringer als das Doppelte einer maximalen Ausdehnung des Strahlungseinwirkbereichs in der Arbeitsebene ist.

Bei der Amplitude der Bewegung handelt es sich insbesondere um den maximalen Abstand, den die Mitte des Strahlungseinwirkbereichs während der Bewegung in der Arbeitsebene zum Endpunkt aufweist. Durch die geschilderte Maßnahme kann für eine gleichmäßigere Verteilung der eingetragenen Strahlungsenergie im Aufbaumaterial gesorgt werden, wodurch eventuell am Endpunkt der Verfestigungsbahn vorhandene Vertiefungen oder Materialanhäufungen verringert werden.

Weiter bevorzugt wird im zweiten Schritt spezifiziert, dass für einen Zeitraum unmittelbar vor dem Richten des Strahlbündels auf den Anfangspunkt der Verfestigungsbahn und/oder für einen Zeitraum unmittelbar nach dem Richten des Strahlbündels auf den Endpunkt der Verfestigungsbahn das Strahlbündel nicht auf das Aufbaumaterial gerichtet ist.

Wenn das Strahlbündel unmittelbar vor oder nach einem Abtastvorgang einer Verfestigungsbahn nicht auf das Aufbaumaterial gerichtet ist, dann kann dadurch sichergestellt werden, dass nirgendwo unbeabsichtigt Aufbaumaterial verfestigt wird. Man kann zu diesem Zweck beispielsweise die die Strahlung erzeugende Strahlungsquelle abschalten oder aber das Strahlbündel so ablenken, dass es nicht auf das Aufbaumaterial trifft. Wenn unmittelbar vor dem Richten des Strahlbündels auf den Anfangspunkt der Verfestigungsbahn und/oder unmittelbar nach dem Richten des Strahlbündels auf den Endpunkt der Verfestigungsbahn das Strahlbündel nicht auf das Aufbaumaterial gerichtet ist, dann liegt jener Fall vor, in dem es im Bereich des Anfangs und des Endes einer Verfestigungsbahn potentiell zu den größten Temperaturunterschieden zwischen zu verfestigenden und nicht zu verfestigenden Stellen des Aufbaumaterials kommen kann. Da jedoch die dem Aufbaumaterial pro Flächeneinheit zugeführte Strahlungsleistung am Anfangs- und/oder Endpunkt der Verfestigungsbahn gegenüber anderen Stellen der Verfestigungsbahn bereits verringert ist, ist bei einem erfindungsgemäßen Vorgehen mit nicht so großen Nachteilen zu rechnen.

Weiter bevorzugt werden die Energieeintragsparameterwerte des Strahlbündels für einen Zeitraum unmittelbar nach dem Richten des Strahlbündels auf den Endpunkt der Verfestigungsbahn so spezifiziert, dass ein Referenzwert für die Strahlungsleistung pro Flächeneinheit im Strahlungseinwirkbereich des Strahlbündels auf dem Aufbaumaterial kleiner oder gleich 50%, bevorzugt kleiner oder gleich 20%, noch bevorzugter kleiner oder gleich 10%, noch weiter bevorzugt kleiner oder gleich 5% des Referenzwerts für die Strahlungsleistung pro Flächeneinheit am Endpunkt beträgt.

Bevorzugt liegt die Strahlungsleistung pro Flächeneinheit nach dem Richten des Strahlbündels auf den Endpunkt unterhalb von 0,05 MW/cm².

Wie weiter oben erläutert wurde, erstreckt sich eine Verfestigungsbahn zwischen einem Anfangspunkt und einem Endpunkt. Mit dem soeben beschriebenen Vorgehen kann vermieden werden, dass an den Endpunkt angrenzende Stellen des Aufbaumaterials außerhalb der spezifizierten Verfestigungsbahn verfestigt werden. Die Ränder des verfestigten Bereichs sollen in der Regel mit hoher Detailgenauigkeit ausgebildet werden, was mit einer präzisen Abgrenzung des verfestigten Bereichs gegenüber unverfestigtem oder zuvor verfestigtem Aufbaumaterial einhergeht. Mit dem beschriebenen Vorgehen ist es möglich, für eine deutliche Abgrenzung des verfestigten Bereichs gegenüber umliegendem Aufbaumaterial zu sorgen. Bevorzugt wird außerhalb der Verfestigungsbahn (z. B. in den bereits erwähnten Umkehrbereichen) höchstens soviel Energie eingetragen, dass das Aufbaumaterial zwar erwärmt wird, aber keine Verfestigung bewirkt wird.

Bevorzugt werden die Energieeintragsparameterwerte so spezifiziert, dass innerhalb des an den Endpunkt angrenzenden Abschnitts der Verfestigungsbahn der Referenzwert für die Strahlungsleistung pro Flächeneinheit im Strahlungseinwirkbereich des Strahlbündels abnimmt.

Durch die Steigerung der Strahlungsleistung pro Flächeneinheit in einem an den Anfangspunkt angrenzenden Abschnitt kann für einen allmählichen Übergang zu größeren Referenzwerten für die Strahlungsleistung pro Flächeneinheit gesorgt werden. Analoges gilt für die Verringerung des Referenzwerts für die Strahlungsleistung pro Flächeneinheit in einem an den Endpunkt angrenzenden Abschnitt der Verfestigungsbahn. Die Änderung des Referenzwerts für die Strahlungsleistung pro Flächeneinheit kann in beiden Fällen in Stufen und/oder kontinuierlich (stufenlos) geschehen.

Bevorzugt wird das verfestigende Strahlbündel so auf die Verfestigungsbahn gerichtet, dass beim Abtasten der Verfestigungsbahn die Geschwindigkeit der Bewegung des Strahlungseinwirkbereich des Strahlbündels auf dem Aufbaumaterial innerhalb des an den Anfangspunkt angrenzenden Abschnitts der Verfestigungsbahn zunimmt und/oder innerhalb des an den Endpunkt angrenzenden Abschnitts der Verfestigungsbahn abnimmt.

Durch die beschriebene Anpassung der Bewegungsgeschwindigkeit des Strahlungseinwirkbereich an die Strahlungsleistung pro Flächeneinheit kann die dem Aufbaumaterial insgesamt zugeführte Energiemenge pro Flächeneinheit eingestellt werden. Beispielsweise wird bei einer geringeren Bewegungsgeschwindigkeit der Strahlungseinwirkbereich eine längere Zeit zum Überfahren einer bestimmten Stelle der Aufbaumaterialschicht benötigen, so dass sich die eingetragene Energiemenge vergrößert (im Vergleich zu einem Fall, in dem eine relativ dazu höhere Bewegungsgeschwindigkeit gewählt wurde).

Bevorzugt wird die Geschwindigkeit monoton abgeändert. Beispielsweise kann eine kontinuierliche, insbesondere lineare, Abnahme der Bewegungsgeschwindigkeit des Strahlungseinwirkbereichs entlang der Verfestigungsbahn bis zum Erreichen des Endpunktes spezifiziert werden. Entsprechendes gilt für eine Erhöhung der Geschwindigkeit ab dem Anfangspunkt der Verfestigungsbahn. Je nach verwendeter Steuereinrichtung kann die Geschwindigkeit entsprechend einer Funktion abgeändert werden, die durch einen Steuermechanismus für die Bewegung des Strahlungseinwirkbereichs vorgegeben ist. Dabei könnten auch kurzfristige Erhöhungen der Geschwindigkeit denkbar sein, während sich der Strahlungseinwirkbereich dem Endpunkt der Verfestigungsbahn entgegenbewegt oder kurzfristige Erniedrigungen der Geschwindigkeit kurz nach dem Verlassen des Anfangspunktes der Verfestigungsbahn. Schließlich ist es auch möglich, dass die Geschwindigkeit in Stufen abgeändert wird, beispielsweise nach Verlassen des Anfangspunktes der Verfestigungsbahn zunächst in Stufen erhöht wird, bis ein Maximal- bzw. vorgegebener Zielwert der Geschwindigkeit erreicht ist. Ebenso kann die Geschwindigkeit in Stufen zum Ende der Verfestigungsbahn hin verringert werden.

Weiter bevorzugt wird das Strahlbündel so auf die Verfestigungsbahn gerichtet, dass die Geschwindigkeit der Bewegung des Strahlungseinwirkbereichs des Strahlbündels in der Arbeitsebene innerhalb eines an einen Anfangspunkt angrenzenden Abschnitts der Verfestigungsbahn um mindestens 10%, bevorzugter um mindestens 100%, noch bevorzugter um mindestens 1000% zunimmt und/oder innerhalb des an den Endpunkt angrenzenden Abschnitts der Verfestigungsbahn um mindestens 20%, bevorzugter um mindestens 50%, noch bevorzugter um mindestens 80%, abnimmt.

Das Ausmaß, um das die Geschwindigkeit der Bewegung des Strahlungseinwirkbereichs zum Endpunkt der Verfestigungsbahn hin verringert wird bzw. vom Anfangspunkt der Verfestigungsbahn an erhöht wird, kann an Bedingungen eines jeweiligen Herstellungsprozesses gekoppelt werden. Es kann beispielsweise von einer verwendeten Energieeintragseinrichtung, z. B. einem Spiegelsystem zur Umlenkung von Laserstrahlen, und/oder dem Aufbaumaterial abhängig sein, für welches z. B. bestimmte Aufschmelzbedingungen einzuhalten sind.

Die in das Aufbaumaterial eingetragene Energiemenge pro Flächeneinheit kann besonders dann präzise eingestellt werden, wenn die Strahlungsleistung pro Flächeneinheit und die Geschwindigkeit der Bewegung des Strahlungseinwirkbereichs gemeinsam, insbesondere simultan, verändert werden. Dabei kann für die zur Verfestigung einzutragende Energiemenge ein gewisser Spielraum vorhanden sein, z. B. bei einer Verwendung von metallenem oder metallhaltigem bzw. metallbasiertem (Metallanteil >50 Volumenprozent) Pulver als Aufbaumaterial. Es kann daher ausreichend sein, wenn bei der gemeinsamen Abänderung von Strahlungsleistung pro Flächeneinheit und Geschwindigkeit der Bewegung des Strahlungseinwirkbereichs die einzutragende Energiemenge pro Flächeneinheit innerhalb eines vorgegebenen Wertebereichs gehalten wird. Der Ausdruck "einzutragende Energiemenge pro Flächeneinheit" bezieht sich dabei auf die u. a. unter Berücksichtigung des Absorptionsvermögens des Aufbaumaterials im Vorhinein ermittelte Flächenenergie, die dem Aufbaumaterial zur Verfestigung desselben zugeführt werden soll.

Weiter bevorzugt wird die Geschwindigkeit der Bewegung des Strahlungseinwirkbereichs des Strahlbündels in der Arbeitsebene innerhalb eines an einen Anfangspunkt angrenzenden Abschnitts der Verfestigungsbahn und/oder innerhalb des an den Endpunkt angrenzenden Abschnitts der Verfestigungsbahn so zusammen mit dem Referenzwert für die Strahlungsleistung pro Flächeneinheit im Strahlungseinwirkbereich variiert, dass zumindest an einer Stelle die prozentuale Änderung des Referenzwerts für die Strahlungsleistung pro Flächeneinheit pro Zeiteinheit größer ist als die prozentuale Änderung der Geschwindigkeit der Bewegung pro Zeiteinheit.

Durch solch ein Vorgehen kann für einen kontinuierlichen Übergang zu einem niedrigeren Energieeintrag pro Flächeneinheit am Anfang und Ende einer Verfestigungsbahn gesorgt werden.

Bevorzugt wird im zweiten Schritt spezifiziert, dass der Strahlungseinwirkbereich des Strahlbündels vom Endpunkt der Verfestigungsbahn an den Anfangspunkt einer anderen Verfestigungsbahn bewegt wird, wobei während dieser Bewegung die durch das Strahlbündel in das Aufbaumaterial eingetragene Energie keine Verfestigung desselben bewirkt und bevorzugt Null ist. Wie bereits erwähnt, ist die Erfindung beispielsweise dort von Vorteil, wo es einen Übergang zwischen verfestigender und nicht verfestigender Abtastung des Aufbaumaterials gibt, insbesondere wenn von einer zu verfestigenden Stelle der Aufbaumaterialschicht zu einer davon beabstandeten anderen zu verfestigenden Stelle übergegangen wird, d. h. der Strahlungseinwirkbereich des Strahlbündels auf dem Aufbaumaterial von einer Stelle der Aufbaumaterialschicht zu einer anderen Stelle der Aufbaumaterialschicht bewegt wird, ohne dass während dieser Bewegung eine Verfestigung von Aufbaumaterial beabsichtigt ist. Um eine Verfestigung des Aufbaumaterials zu vermeiden, kann beispielsweise die Strahlungsleistung pro Flächeneinheit während des Übergangs zum Anfangspunkt einer anderen Verfestigungsbahn erheblich reduziert werden.

Weiter bevorzugt wird im zweiten Schritt in dem Datenmodell eine Bewegung des zumindest einen Strahlbündels entlang einer Mehrzahl von zueinander benachbarten, bevorzugt zumindest stellenweise zueinander im Wesentlichen parallelen, Verfestigungsbahnen spezifiziert. Es bietet sich an, das erfindungsgemäße Verfahren in Zusammenhang mit dem Hatchen (deutsch: Schraffieren) von Bereichen einer Aufbaumaterialschicht anzuwenden. Beim Hatchen wird der Strahlungseinwirkbereich eines Strahlbündels in der Regel entlang von zueinander parallelen Verfestigungsbahnen bewegt, wobei an einem Endpunkt einer Verfestigungsbahn eine Bewegung des Strahlbündels ohne Verfestigung von Aufbaumaterial zum Anfangspunkt einer nächsten Verfestigungsbahn stattfindet. Die Bewegung ohne Verfestigung von Aufbaumaterial kann mit einer Richtungsumkehr der Bewegungsrichtung verbunden sein, muss es aber nicht. Die Verfestigungsbahnen können exakt parallel zueinander sein, müssen es aber nicht. Es ist durchaus möglich, dass die Verfestigungsbahnen nur im Wesentlichen zueinander parallel sind.

Wie bereits in der Beschreibungseinleitung erwähnt wurde, sollten eigentlich durch das Abschalten des Laserstrahls verursachte Inhomogenitäten nicht von Belang sein, da durch den Auftrag der nachfolgenden Pulverschicht und den anschließenden Prozessschritt des selektiven Aufschmelzens eventuell entstandene Vertiefungen ("Löcher") aufgefüllt werden. Die Erfinder erklären sich die dennoch auftretenden Probleme damit, dass die über einer Vertiefung bzw. einem Loch vorhandene, gegenüber einer üblichen Schichtdicke vergrößerte Pulversäule sich beim Aufschmelzen anders verhält als die Kombination aus Pulver in einer neu aufgetragenen Schicht und verfestigtem Aufbaumaterial in der darunterliegenden Schicht. Die Ursache des unterschiedlichen Aufschmelzverhaltens kann eine deutlich geringere Dichte des aufzuschmelzenden Materials im Loch in der darunterliegenden Schicht im Vergleich zu bereits verfestigtem Material um das Loch herum sein und damit eine geringere Masse an aufzuschmelzendem Material pro Volumeneinheit. Als Folge dringt der Laser an der Stelle des Loches rascher und tiefer in die Schicht bzw. darunterliegende Schichten ein, was zur Folge hat, dass das Loch auch nach dem Verfestigen der nachfolgenden Schicht noch nicht vollständig beseitigt ist.

Obwohl das erfindungsgemäße Vorgehen bei dem soeben geschilderten Fall bereits zu einer Verbesserung bzw. Homogenisierung der Struktur des Objekts bzw. Bauteils führt, sind die deutlichsten Effekte dort zu sehen, wo bei der additiven Fertigung Stellen, an denen die Laserleistung auf Null gesetzt oder zumindest deutlich reduziert wird, in zwei oder mehr unmittelbar aufeinanderfolgenden Schichten übereinander liegen. Solch eine Situation kann dann eintreten, wenn Endpunkte von Hatchlinien in zwei oder mehr aufeinanderfolgenden Schichten übereinanderliegen. Gerade an diesen Stellen ist das erfindungsgemäße Vorgehen von Vorteil, insbesondere wenn drei oder mehr Endpunkte von Hatchlinien direkt übereinanderliegen, also die gleiche Position in der Bauebene aufweisen.

Insbesondere wenn die Geschwindigkeit der Bewegung des Strahlungseinwirkbereichs auf dem Aufbaumaterial innerhalb des an den Anfangspunkt angrenzenden Abschnitts der Verfestigungsbahn zunimmt und/oder innerhalb des an den Endpunkt angrenzenden Abschnitts der Verfestigungsbahn abnimmt, kann bei der Richtungsumkehr eine Bewegung des Strahlbündels entlang eines kleinen Kurvenradius stattfinden. Dadurch kann die benötigte Zeitdauer für den Übergang zum Anfangspunkt der nächsten Verfestigungsbahn kürzer ausfallen als in einem Fall, in dem die Bewegungsgeschwindigkeit des Strahlbündels beispielsweise erst nach dem Endpunkt verringert und vor dem Anfangspunkt der nächsten Verfestigungsbahn wieder auf eine konstante Zielgeschwindigkeit erhöht wird, wodurch der Auftreffbereich des Strahlbündels auf dem Aufbaumaterial in der Regel eine erheblich längere Wegstrecke zurücklegt. Natürlich wird für das Abtasten der Bewegungsbahn mehr Zeit benötigt, wenn sich der Strahlungseinwirkbereich des Strahlbündels mit verringerter Geschwindigkeit bewegt. Allerdings kann die Bewegungsrichtung im Umkehrbereich nicht beliebig schnell verändert werden, so dass bei hohen Geschwindigkeiten des Strahlbündels der Kurvenradius, entlang dessen sich das Strahlbündel bei der Richtungsumkehr bewegt, größer ist als bei niedrigen Geschwindigkeiten. Aus der verringerten Weglänge bei der Richtungsumkehr bei verringerter Geschwindigkeit kann somit letztendlich eine insgesamt kürzere Zeitdauer für das Verfestigen einer Schicht des Aufbaumaterials resultieren.

Weiter bevorzugt wird im zweiten Schritt in dem Datenmodell ein Energieeintrag in aneinandergrenzenden, bevorzugt rechteckigen oder quadratischen, Bestrahlungsbereichen spezifiziert, wobei in einem Bestrahlungsbereich ein Energiestrahlbündel in im Wesentlichen zueinander parallelen Verfestigungsbahnen über das Aufbaumaterial bewegt wird. Wie bereits erwähnt, eignet sich das erfindungsgemäße Vorgehen insbesondere für das im Stand der Technik verbreitete Verfestigen des Aufbaumaterials Teilbereich für Teilbereich, bei dem in den einzelnen Teilbereichen (z. B. Streifen oder Quadraten oder einer geschlossenen Querschnittsfläche, die auch unregelmäßig geformt sein kann) eine Abtastung durch Schraffur entlang von Verfestigungsbahnen stattfindet, die exakt oder im Wesentlichen zueinander parallel sind. In diesen Fällen wird in dem Datenmodell ein Energieeintrag in aneinandergrenzenden, bevorzugt rechteckigen oder quadratischen, Bestrahlungsbereichen spezifiziert, wobei in einem Bestrahlungsbereich ein Strahlbündel in im Wesentlichen parallelen Verfestigungsbahnen über das Aufbaumaterial bewegt wird.

Bei einem erfindungsgemäßen additiven Herstellverfahren zur Herstellung eines dreidimensionalen Objekts, wobei das Objekt mittels einer additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparameterwerten entlang einer Anzahl von Verfestigungsbahnen abgetastet werden, wird der Ablauf des additiven Herstellverfahrens durch einen Steuerdatensatz gesteuert wird, der unter Verwendung eines erfindungsgemäßen computergestützten Verfahrens zur Bereitstellung von Steuerdaten für eine additive Herstellvorrichtung zur Herstellung eines dreidimensionalen Objekts generiert wurde.

Wenn erfindungsgemäß bereitgestellte Steuerdaten in einem Steuerdatensatz verwendet werden, der für die Steuerung eines additiven Herstellverfahrens generiert wurde, insbesondere die Steuerung eines schichtweisen additiven Herstellverfahrens, wie beispielsweise eines schichtweisen Pulverschmelz- oder Sinterverfahrens, wie z.B. SLS oder DMLS oder SLM, dann kann die Bauteilhomogenität des Objekts verbessert werden.

Eine erfindungsgemäße Vorrichtung zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparameterwerten entlang einer Anzahl von Verfestigungsbahnen abgetastet werden, weist auf:
eine Datenzugriffseinheit, die ausgelegt ist zum Zugriff auf computerbasierte Modelldaten zumindest eines Abschnitts des herzustellenden Objekts,
eine Datenmodell-Erzeugungseinheit, die ausgelegt ist, zumindest ein Datenmodell eines zur Herstellung des zumindest einen Objektabschnitts selektiv zu verfestigenden Bereichs einer Aufbaumaterialschicht zu erzeugen, wobei in dem Datenmodell ein Verfestigen des Aufbaumaterials durch Bewegen zumindest eines Strahlbündels entlang zumindest einer Verfestigungsbahn spezifiziert ist,
wobei beim Richten des zumindest einen Strahlbündels auf den Endpunkt der zumindest einen Verfestigungsbahn ein Satz von Energieeintragsparameterwerten spezifiziert ist, der einen Referenzwert für die Strahlungsleistung pro Flächeneinheit im Strahlungseinwirkbereich des Strahlbündels auf dem Aufbaumaterial bewirkt, welcher geringer ist als der Referenzwert für die Strahlungsleistung pro Flächeneinheit an anderen Stellen der Verfestigungsbahn, und
eine Steuerdaten-Bereitstellungseinheit, die ausgelegt ist, Steuerdaten entsprechend dem durch die Datenmodell-Erzeugungseinheit erzeugten zumindest einen Datenmodell für die Generierung eines Steuerdatensatzes für die additive Herstellvorrichtung bereit zu stellen.

Die Bereitstellung des im zweiten Schritt erzeugten Datenmodells für die Generierung eines Steuerdatensatzes kann durch die Steuerdaten-Bereitstellungseinheit selbst geschehen, indem diese das erzeugte Datenmodell in einen Steuerdatensatz für die additive Herstellvorrichtung integriert. Bereitstellen umfasst aber auch ein Weiterleiten des Datenmodells an eine Datenverarbeitungsvorrichtung, welche das Datenmodell in einen Steuerdatensatz integriert, oder ein direktes Weiterleiten an eine additive Herstellvorrichtung. Insbesondere ist es möglich, während eines Herstellvorgangs in der additiven Herstellvorrichtung dieser dynamisch Datenmodelle für noch herzustellende Objektquerschnitte zur Verfügung zu stellen. Insbesondere müssen im zweiten Schritt erzeugte Datenmodelle nicht einzeln für einen additiven Herstellvorgang bereitgestellt werden. Vielmehr können auch mehrere erzeugte Datenmodelle zunächst gesammelt und anschließend in ihrer Gesamtheit zur Integration in einen Steuerdatensatz bereitgestellt werden.

Eine erfindungsgemäße Vorrichtung zur computergestützten Ansteuerung einer Anzahl von Energieeintragseinrichtungen einer additiven Herstellvorrichtung zur Herstellung eines dreidimensionalen Objekts mittels derselben,
wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparametern entlang einer Anzahl von Verfestigungsbahnen abgetastet werden, ist so ausgelegt ist, dass ein Verfestigen des Aufbaumaterials durch Bewegen zumindest eines Strahlbündels entlang zumindest einer Verfestigungsbahn so stattfindet, dass für den Endpunkt der zumindest einen Verfestigungsbahn ein Satz von Energieeintragsparameterwerten spezifiziert ist, der einen Referenzwert für die Strahlungsleistung pro Flächeneinheit im Strahlungseinwirkbereich des Strahlbündels auf dem Aufbaumaterial bewirkt, welcher geringer ist als der Referenzwert für die Strahlungsleistung pro Flächeneinheit an anderen Stellen der Verfestigungsbahn.

Die Vorrichtung zur computergestützten Ansteuerung einer Anzahl von Energieeintragseinrichtungen kann alleine mittels Software-Komponenten, mittels einer Mischung aus Hardware- und Softwarekomponenten oder sogar alleine mittels Hardwarekomponenten realisiert werden. Eine alleine mittels Softwarekomponenten realisierte Vorrichtung kann zur Herstellung eines dreidimensionalen Objekts insbesondere mit einer Steuereinrichtung in einer additiven Herstellvorrichtung interagieren oder in solch eine Steuereinrichtung integriert sein. Mittels der Vorrichtung zur computergestützten Ansteuerung einer Anzahl von Energieeintragseinrichtungen kann die Bauteilhomogenität von durch ein additives Herstellverfahren hergestellten Objekten verbessert werden. Insbesondere kann die Vorrichtung eine Herstellung von Objekten durch ein additives Herstellverfahren unter Zugrundelegung eines Steuerdatensatzes implementieren, der mittels eines erfindungsgemäßen Verfahrens zur Bereitstellung von Steuerdaten generiert wurde.

Eine erfindungsgemäße additive Herstellvorrichtung zur Herstellung eines dreidimensionalen Objekts, wobei in der additiven Herstellvorrichtung das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparametern entlang einer Anzahl von Verfestigungsbahnen abgetastet werden, weist auf:
eine Schichtaufbringvorrichtung, die geeignet ist, eine Schicht eines Aufbaumaterials auf eine bereits vorhandene, bevorzugt bereits selektiv verfestigte, Aufbaumaterialschicht aufzubringen,
eine Energieeintragseinrichtung, die geeignet ist, dem Querschnitt des Objekts in einer Schicht zugeordneten Stellen Strahlungsenergie zuzuführen, indem diese Stellen mit mindestens einem Strahlbündel gemäß einem Satz von Energieeintragsparameterwerten entlang einer Anzahl von Verfestigungsbahnen abgetastet werden,
wobei die additive Herstellvorrichtung eine erfindungsgemäße Vorrichtung zur computergestützten Ansteuerung einer Anzahl von Energieeintragseinrichtungen einer additiven Herstellvorrichtung zur Herstellung eines dreidimensionalen Objekts mittels derselben aufweist und/oder mit einer erfindungsgemäße Vorrichtung zur computergestützten Ansteuerung einer Anzahl von Energieeintragseinrichtungen einer additiven Herstellvorrichtung zur Herstellung eines dreidimensionalen Objekts mittels derselben signaltechnisch verbunden ist.

Eine Energieeintragseinrichtung kann hierbei eine Anzahl von Strahlungsquellen zur Erzeugung von Strahlung, z.B. elektromagnetischer Strahlung oder Teilchenstrahlung, sowie eine damit verbundene Anzahl von Strahlablenk- oder -umlenkeinrichtungen zum Richten der Strahlung auf das Aufbaumaterial umfassen. Insbesondere ist bevorzugt einer Strahlablenkeinrichtung genau ein Strahlungseinwirkbereich auf dem Aufbaumaterial zugeordnet. Bei den Strahlungsquellen kann es sich beispielsweise um einen oder mehrere Gas- oder Festkörperlaser oder jede andere Art von Lasern wie z.B. Laserdioden, insbesondere VCSELn (Vertical Cavity Surface Emitting Laser) oder VECSELn (Vertical External Cavity Surface Emitting Laser) oder eine Zeile dieser Laser handeln.

Insbesondere kann bei Erzeugung der Steuerdaten in der additiven Herstellvorrichtung diese während eines Herstellvorgangs mittels der Datenmodell-Erzeugungseinheit dynamisch Datenmodelle für noch herzustellende Objekt(teil)querschnitte erzeugen.

Ein erfindungsgemäßes Computerprogramm weist Programmcodemittel auf, um alle Schritte eines Verfahrens gemäß einem erfindugnsgemäßen computergestützten Verfahren zur Bereitstellung von Steuerdaten für eine additive Herstellvorrichtung zur Herstellung eines dreidimensionalen Objekts auszuführen, wenn das Computerprogramm mittels eines Datenprozessors, insbesondere eines mit einer additiven Herstellvorrichtung zusammenwirkenden Datenprozessors, ausgeführt wird.

"Zusammenwirken" heißt hierbei, dass der Datenprozessor entweder in die additive Herstellvorrichtung integriert ist oder mit ihr Daten austauschen kann. Die Implementierung des erfindungsgemäßen Verfahrens zur Bereitstellung von Steuerdaten sowie der zugehörigen Vorrichtung mittels Software ermöglicht eine einfache Installierbarkeit auf verschiedenen EDV-Systemen an verschiedenen Orten (beispielsweise beim Ersteller des Designs des Objekts oder aber beim Betreiber der additiven Herstellvorrichtung).

Weitere Merkmale und Zweckmäßigkeiten der Erfindung ergeben sich aus der Beschreibung von Ausführungsbeispielen anhand der beigefügten Figuren.
Fig. 1 zeigt eine schematische, teilweise im Schnitt dargestellte Ansicht einer beispielhaften Vorrichtung zum additiven Herstellen eines dreidimensionalen Objekts gemäß einer Ausführungsform der Erfindung,
Fig. 2 zeigt schematisch ein Beispiel für das erfindungsgemäße Vorgehen bei einer Verfestigung eines streifenförmigen Teilbereichs eines Objektquerschnitts,
Fig. 3a zeigt schematisch die Veränderung des Betrags der Geschwindigkeit eines Strahlbündels entlang der oberen Verfestigungsbahn in Fig. 2,
Fig. 3b zeigt schematisch die Veränderung des Referenzwerts für die Strahlungsleistung pro Flächeneinheit eines Strahlbündels entlang der oberen Verfestigungsbahn in Fig. 2,
Fig. 4a zeigt schematisch die Veränderung des Betrags der Geschwindigkeit eines Strahlbündels entlang der zweitobersten Verfestigungsbahn in Fig. 2,
Fig. 4b zeigt schematisch die Veränderung des Referenzwerts für die Strahlungsleistung pro Flächeneinheit eines Strahlbündels entlang der zweitobersten Verfestigungsbahn in Fig. 2,
Fig. 5 zeigt schematisch die Veränderung des Referenzwerts für die Strahlungsleistung pro Flächeneinheit eines Strahlbündels entlang einer Verfestigungsbahn gemäß einer Variante,
Fig. 6 zeigt schematisch die Veränderung des Referenzwerts für die Strahlungsleistung pro Flächeneinheit eines Strahlbündels entlang einer Verfestigungsbahn gemäß einer anderen Variante,
Fig. 7 veranschaulicht den Ablauf eines Verfahrens zur Bereitstellung von Steuerdaten,
Fig. 8 zeigt den schematischen Aufbau einer Vorrichtung zur Bereitstellung von Steuerdaten,
Fig. 9 zeigt ein spezielles Ausführungsbeispiel der Erfindung.
Fig. 10 zeigt ein der Anmelderin bekanntes Vorgehen zum Abtasten eines Objektquerschnitts mit Energiestrahlung,
Fig. 11 dient der weiteren Erläuterung des in Fig. 10 gezeigten Vorgehens.

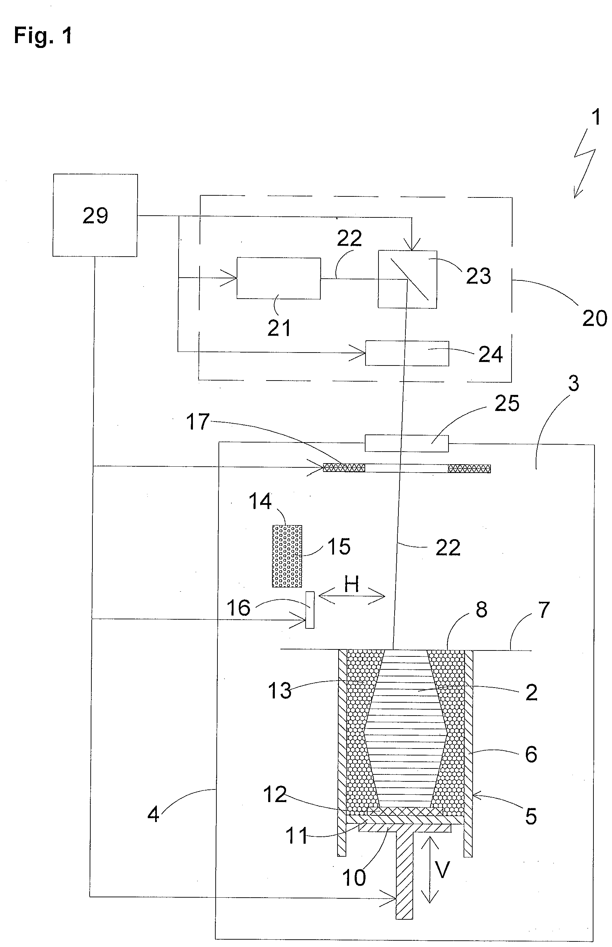

Für eine Beschreibung der Erfindung soll zunächst nachfolgend am Beispiel einer Lasersinter- oder -schmelzvorrichtung eine erfindungsgemäße additive Herstellvorrichtung unter Bezugnahme auf Fig. 1 beschrieben werden.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 ausgebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersinter- oder -schmelzvorrichtung 1 enthält weiterhin einen Vorratsbehälter 14 für ein Aufbaumaterial 15, in diesem Beispiel ein durch elektromagnetische Strahlung verfestigbares Pulver, und einen in einer horizontalen Richtung H bewegbaren Beschichter 16 zum Aufbringen des Aufbaumaterials 15 innerhalb des Baufelds 8. Optional kann in der Prozesskammer 3 eine Heizvorrichtung, z.B. eine Strahlungsheizung 17 angeordnet sein, die zum Beheizen des aufgebrachten Aufbaumaterials dient. Als Strahlungsheizung 17 kann beispielsweise ein Infrarotstrahler vorgesehen sein.

Die beispielhafte additive Herstellvorrichtung 1 enthält ferner eine Energieeintragseinrichtung 20 mit einem Laser 21, der einen Laserstrahl 22 erzeugt, welcher über eine Umlenkvorrichtung 23 umgelenkt wird und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Beim Lasersintern oder Laserschmelzen kann eine Energieeintragseinrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser aufweisen. Der in Fig. 1 gezeigte spezifische Aufbau einer Lasersinter- oder -schmelzvorrichtung ist daher für die vorliegende Erfindung nur beispielhaft und kann natürlich auch abgewandelt werden, insbesondere bei Verwendung einer anderen Energieeintragseinrichtung als der gezeigten. Um kenntlich zu machen, dass die Fläche des Strahlungsauftreffbereichs auf dem Aufbaumaterial nicht notwendigerweise sehr klein ("punktförmig") sein muss, wird in dieser Anmeldung auch oftmals der Begriff "Strahlbündel" synonym zu "Strahl" verwendet.

Die Lasersintervorrichtung 1 enthält weiterhin eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der additiven Herstellvorrichtung angebracht sein. Die Steuereinrichtung kann eine CPU enthalten, deren Betrieb durch ein Computerprogramm (Software) gesteuert wird. Das Computerprogramm kann getrennt von der additiven Herstellvorrichtung in einer Speichervorrichtung gespeichert sein, von wo aus es (z.B. über ein Netzwerk) in die additive Herstellvorrichtung, insbesondere in die Steuereinrichtung, geladen werden kann.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Alle im weiteren Verlauf gemachten Ausführungen gelten nicht nur für Lasersinter- oder -schmelzvorrichtungen, sondern auch für anders geartete additive Herstellvorrichtungen, bei denen Wärmeenergie mittels Strahlung in das Aufbaumaterial eingetragen wird.

In der soeben beispielhaft beschriebenen additiven Herstellvorrichtung geht ein Herstellvorgang so vonstatten, dass die Steuereinheit 29 einen Steuerdatensatz abarbeitet.

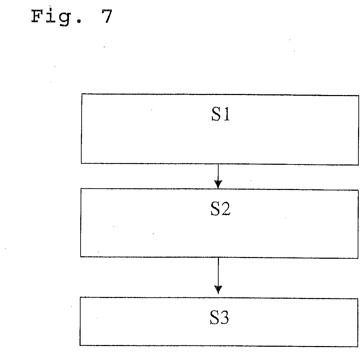

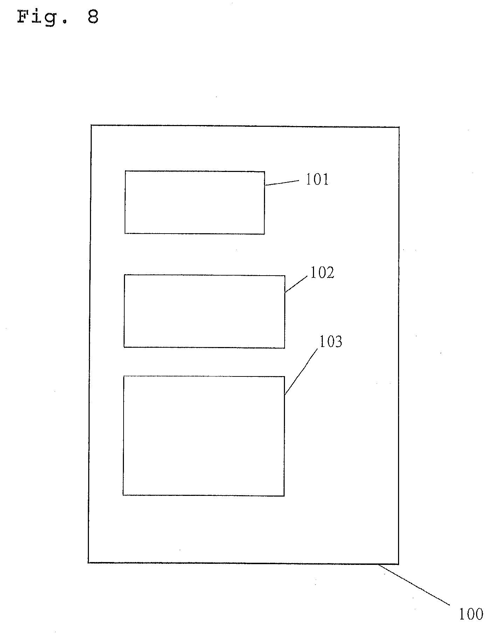

Durch den Steuerdatensatz wird einer Energieeintragseinrichtung, im Falle der obigen Lasersinter- oder Laserschmelzvorrichtung speziell der Umlenkvorrichtung 23, für jeden Zeitpunkt während des Verfestigungsvorgangs vorgegeben, auf welche Stelle der Arbeitsebene 7 Strahlung richten ist. Wie in Fig. 8 gezeigt, enthält eine Vorrichtung 100 zur Bereitstellung von Steuerdaten für eine additive Herstellvorrichtung eine Datenzugriffseinheit 101, eine Datenmodell-Erzeugungseinheit 102, und eine Steuerdaten-Bereitstellungseinheit 103. Die Funktionsweise der Vorrichtung 100 zur Bereitstellung von Steuerdaten wird unter Bezugnahme auf Fig. 7 beispielhaft beschrieben.

In der in Fig. 8 gezeigten Vorrichtung 100 zur Bereitstellung von Steuerdaten für eine additive Herstellvorrichtung greift zunächst die Datenzugriffseinheit 101 auf eine Anzahl, also einen oder mehrere, von Schichtdatensätzen zu, von denen jeder ein Datenmodell eines während der Herstellung selektiv zu verfestigenden Bereichs einer Aufbaumaterialschicht, bevorzugt des gesamten zu verfestigenden Bereichs einer Aufbaumaterialschicht aufweist, der einem Querschnitt eines Objektabschnitts entspricht. In dem in Fig. 7 gezeigten Verfahrensablauf ist dies der erste Schritt S1.

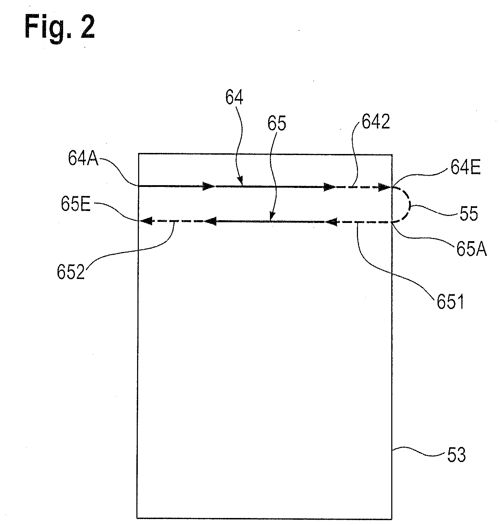

In dem in Fig. 7 gezeigten zweiten Schritt S2 spezifiziert nun die Datenmodell-Erzeugungseinheit 102 in zumindest einem Datenmodell des zumindest einen Objektabschnitts eine Verfestigung von Stellen einer Aufbaumaterialschicht in einer zeitlichen Reihenfolge, die der Bewegung eines Strahlbündels entlang einer Verfestigungsbahn über das Aufbaumaterial entspricht. Das Vorgehen wird anhand von Fig. 2 erläutert.

Fig. 2 zeigt einen Teilbereich 53 des Objektquerschnitts, der im Beispiel streifenförmig ist und durch Bewegen des Strahlbündels Verfestigungsbahn für Verfestigungsbahn abgetastet wird. Der Übersichtlichkeit halber sind in Fig. 2 nur die beiden Verfestigungsbahnen 64 und 65 gezeigt. Unterhalb dieser beiden Verfestigungsbahnen sind noch weitere Verfestigungsbahnen vorhanden, die jedoch nicht dargestellt sind. Anhand der Richtungen der Pfeile in den Verfestigungsbahnen, welche die Bewegungsrichtung des Strahlungseinwirkbereichs des Strahlbündels veranschaulichen sollen, und anhand des Vorhandenseins des Umkehrbereichs 55 erkennt man, dass die Verfestigungsbahn 64 zeitlich vor der Verfestigungsbahn 65 durchlaufen wird. Bei der Verfestigungsbahn 64 sind der Anfangspunkt und der Endpunkt mit den Bezugszeichen 64A bzw. 64E bezeichnet. Bei der Verfestigungsbahn 65 sind der Anfangspunkt und der Endpunkt mit den Bezugszeichen 65A bzw. 65E bezeichnet. Für die Verfestigungsbahn 64 wird im in Fig. 2 linken Bereich der Einfachheit halber angenommen, dass die pro Flächeneinheit auf das Aufbaumaterial auftreffende Strahlungsleistung Φ (genauer gesagt ein Referenzwert derselben) sich nicht mit der Zeit ändert. Dagegen wird im gestrichelt dargestellten Teilabschnitt 642 der Verfestigungsbahn 64 spezifiziert, dass der Referenzwert für die pro Flächeneinheit auf das Aufbaumaterial auftreffende Strahlungsleistung Φ sich während der Bewegung des Strahlungseinwirkbereichs entlang des Teilabschnitts 642 im Mittel verringert.

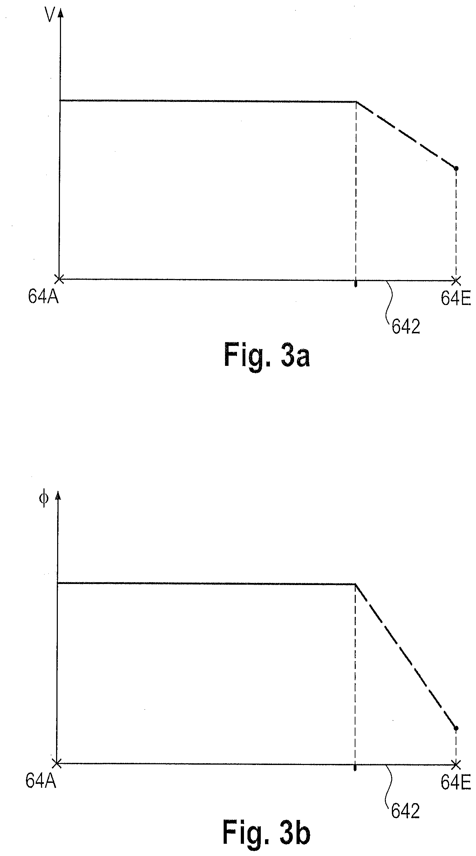

Fig. 3b zeigt eine schematische Darstellung des Verlaufs eines Referenzwerts für die pro Flächeneinheit auf das Aufbaumaterial auftreffende Strahlungsleistung Φ während der Bewegung des Strahlungseinwirkbereichs entlang der Verfestigungsbahn 64. Damit eine bessere Zuordnung zu der in Fig. 2 dargestellten Verfestigungsbahn 64 möglich ist, ist der Verlauf des Referenzwerts für die pro Flächeneinheit auf das Aufbaumaterial auftreffende Strahlungsleistung Φ in Fig. 3b im Verfestigungsbahnabschnitt 642 ebenfalls gestrichelt dargestellt. Man erkennt, dass in dem Verfestigungsbahnabschnitt 642 der Referenzwert für die pro Flächeneinheit auf das Aufbaumaterial auftreffende Strahlungsleistung Φ linear zum Ende 64E der Verfestigungsbahn hin abnimmt. In dem Beispiel der Fig. 3b beträgt der Referenzwert für die pro Flächeneinheit auf das Aufbaumaterial auftreffende Strahlungsleistung Φ am Ende 64E der Verfestigungsbahn 64 lediglich noch ca. 20% des Referenzwerts für die pro Flächeneinheit auf das Aufbaumaterial auftreffende Strahlungsleistung an anderen Stellen der Verfestigungsbahn. Damit erfolgt die Abänderung der Strahlungsleistung pro Flächeneinheit beim Starten des Umkehrvorgangs der Bewegungsrichtung im Umkehrbereich 55 in Fig. 2 nicht mehr so abrupt. Als Folge verbessert sich die Bauteilhomogenität an dieser Stelle.

Nachdem das Ende 64E der Verfestigungsbahn erreicht wurde, also beim Start des Umkehrvorgangs der Bewegungsrichtung, wird in der Regel die Strahlungsleistung pro Flächeneinheit auf einen Wert nahe Null abgesenkt, z. B. durch Blockieren bzw. Unterbrechen der Strahlung oder Abschalten der Strahlungsquelle. Bei genügend großer Absenkung der Strahlungsleistung pro Flächeneinheit ist es jedoch auch möglich, die Energiezufuhr im Umkehrbereich 55 beizubehalten, sofern die Energiezufuhr ausreichend gering ist, um im Umkehrbereich keine Verfestigung des Aufbaumaterials zu bewirken. Die Temperatur des Aufbaumaterials sollte also im Umkehrbereich nicht über die Liquidustemperatur bzw. Schmelztemperatur oder eine bestimmte Temperaturschwelle eines Phasenübergangs (je nachdem, in welcher Weise verfestigt werden soll) ansteigen.

Auch wenn es in manchen Fällen, z. B. bei Verwendung von metallenem oder metallhaltigem Pulver als Aufbaumaterial, möglich ist, während des Absenkens der pro Flächeneinheit auf das Aufbaumaterial auftreffenden Strahlungsleistung zum Ende der Verfestigungsbahn hin die Bewegungsgeschwindigkeit des Strahlungseinwirkbereichs nicht zu verändern, so ist man dennoch in der Regel bestrebt, gleichzeitig mit dem Abändern der pro Flächeneinheit auf das Aufbaumaterial auftreffenden Strahlungsleistung auch die Geschwindigkeit abzuändern. Mit anderen Worten wird bevorzugt zeitgleich oder in zeitlicher Überschneidung mit dem Verringern der pro Flächeneinheit auf das Aufbaumaterial auftreffenden Strahlungsleistung auch die Bewegungsgeschwindigkeit des Strahlungseinwirkbereichs des Strahlbündels verringert. Der Sachverhalt ist wiederum schematisch in Fig. 3a dargestellt. Wiederum ist aus Gründen der besseren Vergleichbarkeit mit Fig. 2 der Verlauf der Geschwindigkeit im Verfestigungsbahnabschnitt 642 gestrichelt dargestellt.

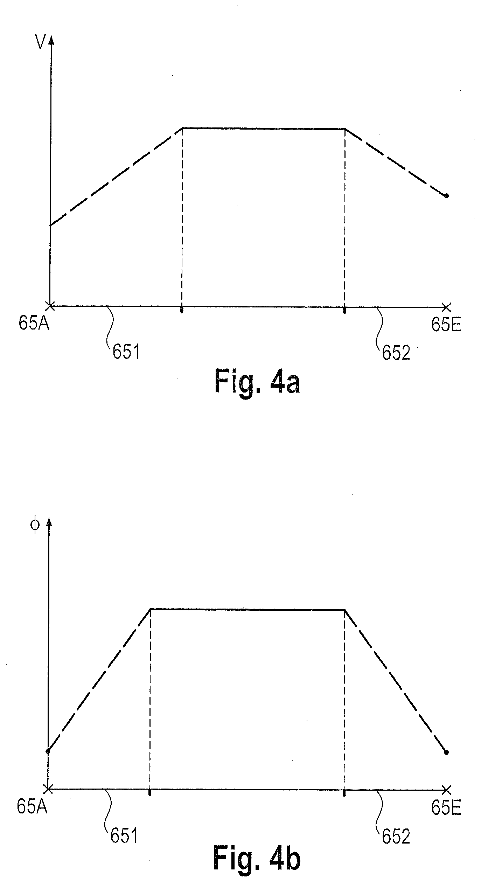

Nicht nur am Ende, sondern auch am Anfang der Verfestigungsbahn kann die Homogenität des Objekts verbessert werden. In Fig. 2 ist dies anhand der Verfestigungsbahn 65 veranschaulicht. Die Verfestigungsbahn 65 weist zum Einen einen Verfestigungsbahnabschnitt 652 auf, in dem der Referenzwert für die pro Flächeneinheit auf das Aufbaumaterial auftreffende Strahlungsleistung zum Ende 65E der Verfestigungsbahn hin verringert wird. Zum Anderen weist sie einen Abschnitt 651 auf, in dem die pro Flächeneinheit auf das Aufbaumaterial auftreffende Strahlungsleistung beim Abtasten der Verfestigungsbahn erhöht wird. Der Sachverhalt ist schematisch in Fig. 4b veranschaulicht. Man erkennt, dass der Referenzwert für die pro Flächeneinheit auf das Aufbaumaterial auftreffende Strahlungsleistung ab dem Anfang 65A der Verfestigungsbahn ausgehend von einem Startwert linear zunimmt, bis ein Maximalwert erreicht ist, der beibehalten wird, um im Verfestigungsbahnabschnitt 652 zum Ende 65E der Verfestigungsbahn 65 hin wiederum linear verringert zu werden. Wie bereits im Zusammenhang mit Fig. 3a und 3b erläutert, kann flankierend zur Variation des Referenzwerts für die pro Flächeneinheit auf das Aufbaumaterial auftreffende Strahlungsleistung auch die Geschwindigkeit variiert werden. Damit kann auch während der Erhöhung des Referenzwerts für die pro Flächeneinheit auf das Aufbaumaterial auftreffende Strahlungsleistung im Verfestigungsbahnabschnitt 651 für einen gleichmäßigen Energieeintrag pro Flächeneinheit gesorgt werden, indem zeitgleich auch die Geschwindigkeit erhöht wird. Bevorzugt sind dabei die Geschwindigkeit und/oder der Referenzwert für die pro Flächeneinheit auf das Aufbaumaterial auftreffende Strahlungsleistung am Anfangspunkt 65A der Verfestigungsbahn 65 gleich der Geschwindigkeit bzw. dem Referenzwert für die pro Flächeneinheit auf das Aufbaumaterial auftreffende Strahlungsleistung am Endpunkt 64E der vorangehenden Verfestigungsbahn 64.

Nachdem im zweiten Schritt S2 in Fig. 7 zumindest ein Datenmodell erzeugt wurde, werden anschließend durch die in Fig. 8 gezeigte Steuerdaten-Bereitstellungseinheit 103 Steuerdaten für die Generierung eines Steuerdatensatzes bereitgestellt. Dabei kann entweder das im zweiten Schritt S2 erzeugte, zumindest eine Datenmodell als Steuerinformation (Steuerdaten) bereitgestellt werden oder aber das Datenmodell wird für eine bessere Integrierbarkeit in einen Steuerdatensatz umformatiert. Das beschriebene Vorgehen kann für alle Verfestigungsbahnen innerhalb eines streifenförmigen oder quadratischen Teilbereichs angewendet werden. Darüber hinaus lässt sich aber das Vorgehen auch dahingehend verallgemeinern, dass in der beschriebenen Weise immer dann vorgegangen wird, wenn beim Abtasten der Aufbaumaterialschicht das Strahlbündel von einer Stelle (dem Endpunkt einer Verfestigungsbahn) zu einer anderen Stelle (dem Anfangspunkt einer anderen Verfestigungsbahn) bewegt wird, ohne dass eine Verfestigung von Aufbaumaterial stattfindet.

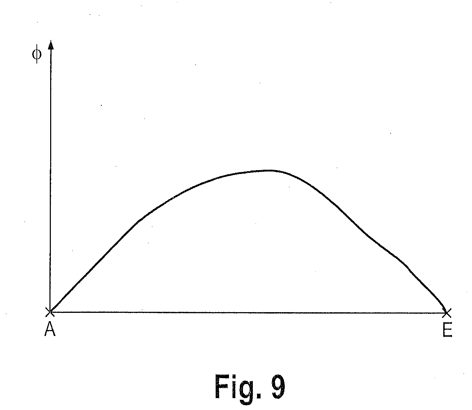

Der Zeitraum, der für die Verringerung oder Erhöhung der pro Flächeneinheit auf das Aufbaumaterial auftreffenden Strahlungsleistung spezifiziert wird, ist in erster Näherung keinen Beschränkungen unterworfen. Der jeweilige Zeitraum am Anfang einer Verfestigungsbahn und/oder am Ende einer Verfestigungsbahn korreliert über die Bewegungsgeschwindigkeit v des Strahlbündels mit der Länge der Abschnitte 651 bzw. 652, 642 am Anfang und Ende der Verfestigungsbahn, in denen der Referenzwert für die pro Flächeneinheit auf das Aufbaumaterial auftreffende Strahlungsleistung variiert wird. Bei kurzen Verfestigungsbahnen werden die entsprechenden Zeiträume (und Abschnitte) entsprechend kurz zu wählen sein, in der Regel so kurz, dass an irgendeiner Stelle der Verfestigungsbahn noch die intendierte pro Flächeneinheit auf das Aufbaumaterial auftreffende Strahlungsleistung erreicht werden kann. Dennoch können bei sehr kurzen Verfestigungsbahnen die Zeiträume am Anfang und Ende der Verfestigungsbahn auch so gewählt werden, dass im Mittelabschnitt der Verfestigungsbahn, also im mittleren Abschnitt bezogen auf die Richtung, in der die Verfestigungsbahn abgetastet wird, die pro Flächeneinheit auf das Aufbaumaterial auftreffende Strahlungsleistung geringer ist als bei Verfestigungsbahnen größerer Länge. Unter Umständen kann dabei entlang der Verfestigungsbahn der Anstieg des Referenzwerts für die pro Flächeneinheit auf das Aufbaumaterial auftreffende Strahlungsleistung direkt in einen Abfall des Referenzwerts für die pro Flächeneinheit auf das Aufbaumaterial auftreffende Strahlungsleistung übergehen. Beispielsweise kann der Referenzwert für die pro Flächeneinheit auf das Aufbaumaterial auftreffende Strahlungsleistung entlang der Verfestigungsbahn einen annähernd sinusförmigen Verlauf (lediglich die erste Halbwelle des Sinus) aufweisen. Solch ein Vorgehen ist schematisch in Fig. 9 dargestellt, in der die Bezugszeichen A und E den Anfang bzw. das Ende einer Verfestigungsbahn kennzeichnen. Natürlich kann die Geschwindigkeit analog verändert werden, z. B. proportional zum Verlauf der Strahlungsleistung pro Flächeneinheit, um bei der Bestrahlung der Verfestigungsbahn für einen möglichst homogenen Energieeintrag zu sorgen. Damit kann beispielsweise ein im Wesentlichen konstanter Energieeintrag pro Flächeneinheit erzielt werden bzw. es können Schwankungen des Energieeintrags pro Flächeneinheit begrenzt werden, z. B. unter 15%, bevorzugt unter 5%, gehalten werden.

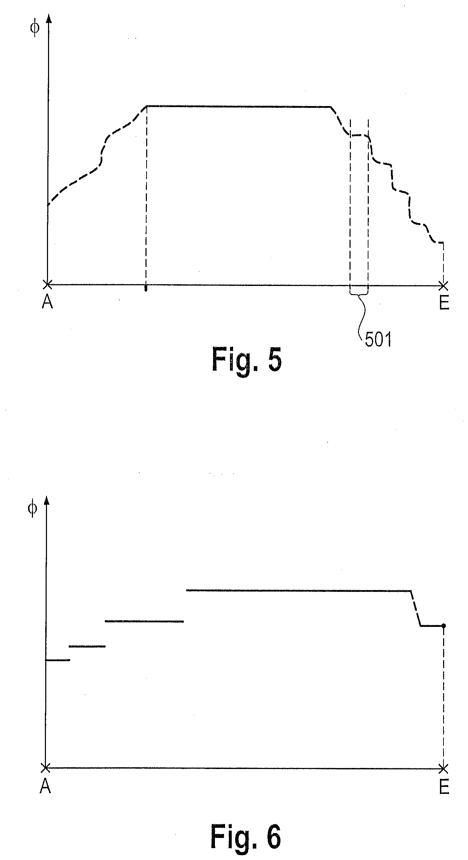

Wie im letzten Absatz bereits angedeutet, müssen die Geschwindigkeit und der Referenzwert für die pro Flächeneinheit auf das Aufbaumaterial auftreffende Strahlungsleistung innerhalb des an den Endpunkt angrenzenden Abschnitts der Verfestigungsbahn und innerhalb des an den Anfangspunkt angrenzenden Abschnitts der Verfestigungsbahn nicht notwendigerweise linear verändert werden. Wie sich Geschwindigkeit und pro Flächeneinheit auf das Aufbaumaterial auftreffende Strahlungsleistung entlang der Verfestigungsbahn verändern, hängt im Wesentlichen auch von der in der additiven Herstellvorrichtung verwendeten Anzahl von Energieeintragseinrichtungen bzw. der Vorrichtung zur Ansteuerung dieser Anzahl von Energieeintragseinrichtungen ab. Fig. 5 zeigt, dass es durchaus möglich ist, dass es während des Absenkens des Referenzwerts für die pro Flächeneinheit auf das Aufbaumaterial auftreffende Strahlungsleistung lokal sogar zu einer Erhöhung des Referenzwerts für die pro Flächeneinheit auf das Aufbaumaterial auftreffende Strahlungsleistung kommt (siehe z. B. den Abschnitt 501 auf der Verfestigungsbahn). Es sollte dabei dennoch zum Endpunkt E hin tendenziell eine Abnahme des Referenzwerts für die pro Flächeneinheit auf das Aufbaumaterial auftreffende Strahlungsleistung spezifiziert sein, die in einem Referenzwert für die pro Flächeneinheit auf das Aufbaumaterial auftreffende Strahlungsleistung Φ am Endpunkt E resultiert, welcher geringer ist, als ein Referenzwert für einen Bereich der Verfestigungsbahn, der weit vom Endpunkt E entfernt ist. Fig. 6 zeigt, dass auch stufenweise Abänderungen der pro Flächeneinheit auf das Aufbaumaterial auftreffenden Strahlungsleistung möglich sind. Das in Fig. 5 und 6 dargestellte Vorgehen lässt sich in gleicher Weise auch auf die Geschwindigkeit anwenden. Dies korrespondiert mit der Arbeitsweise vieler Steuervorrichtungen, die Steuersignale getaktet aussenden, z. B. in festen, kurzen Zeitabständen, was sich entsprechend auf einen Verlauf der von der Strahlungsquelle emittierten Strahlungsleistung pro Flächeneinheit und/oder der Bewegungsgeschwindigkeit des Strahlungseinwirkbereichs auswirken kann.

Obwohl in den Figuren immer nur auf den Fall Bezug genommen wurde, dass in den Umkehrbereichen 55 das Strahlbündel entlang einer bogenförmigen Bahn zum Anfangspunkt der nachfolgenden Verfestigungsbahn bewegt wird, kann alternativ das Strahlbündel auch vom Endpunkt einer Verfestigungsbahn zum Anfangspunkt der nachfolgenden Verfestigungsbahn auf im Wesentlichen geradem Weg bzw. exakt geradem Weg bewegt werden, insbesondere wenn vor Erreichen des Endpunktes die Bewegungsgeschwindigkeit des Strahlungseinwirkbereichs bereits auf einen sehr niedrigen Wert verringert wurde.

Abschließend sei noch erwähnt, dass eine erfindungsgemäße Vorrichtung 100 zur Bereitstellung von Steuerdaten für eine additive Herstellvorrichtung nicht nur allein durch Softwarekomponenten, sondern auch allein durch Hardware-Komponenten oder Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die eingespeisten bzw. ausgegebenen Daten von bereits auf dem gleichen Gerät realisierten anderen Komponenten übernommen werden können, oder an eine andere Komponente nur softwaremäßig übergeben werden müssen. Ebenso könnten die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle, zusammengefasst sein.

## Patentansprüche

1. Computergestütztes Verfahren zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparameterwerten entlang einer Anzahl von Verfestigungsbahnen abgetastet werden, wobei sich eine Verfestigungsbahn zwischen einem Anfangspunkt und einem Endpunkt erstreckt, und außerhalb der Verfestigungsbahn höchstens so viel Energie eingetragen wird, dass das Aufbaumaterial zwar erwärmt wird, aber keine Verfestigung bewirkt wird, wobei das Verfahren zur Bereitstellung von Steuerdaten aufweist:
einen ersten Schritt (S1) des Zugriffs auf computerbasierte Modelldaten zumindest eines Abschnitts des herzustellenden Objekts,
einen zweiten Schritt (S2) des Erzeugens zumindest eines Datenmodells eines zur Herstellung des zumindest einen Objektabschnitts selektiv zu verfestigenden Bereichs einer Aufbaumaterialschicht, wobei in dem Datenmodell ein Verfestigen des Aufbaumaterials durch Bewegen zumindest eines Strahlbündels entlang zumindest einer Verfestigungsbahn (64, 65) spezifiziert ist
wobei für den Endpunkt (64E, 65E) der zumindest einen Verfestigungsbahn (64, 65) ein Satz von Energieeintragsparameterwerten spezifiziert wird, der einen Referenzwert für die Strahlungsleistung pro Flächeneinheit im Strahlungseinwirkbereich des Strahlbündels auf dem Aufbaumaterial bewirkt, welcher geringer ist als der Referenzwert für die Strahlungsleistung pro Flächeneinheit an anderen Stellen der Verfestigungsbahn (64, 65), und
einen dritten Schritt (S3), in dem Steuerdaten entsprechend dem im zweiten Schritt (S2) erzeugten zumindest einen Datenmodell für die Generierung eines Steuerdatensatzes für die additive Herstellvorrichtung bereitgestellt werden.

2. Verfahren nach Anspruch 1, bei dem der Referenzwert für die Strahlungsleistung pro Flächeneinheit im Strahlungseinwirkbereich auf dem Aufbaumaterial am Endpunkt (64E, 65E) einer Verfestigungsbahn (64, 65) kleiner oder gleich 50%, bevorzugt kleiner oder gleich 20%, noch bevorzugter kleiner oder gleich 10%, noch weiter bevorzugt kleiner oder gleich 5%, noch weiter bevorzugt maximal 3%, noch weiter bevorzugt maximal 2% des Referenzwertes für die Strahlungsleistung pro Flächeneinheit an den anderen Stellen der Verfestigungsbahn ist.

3. Verfahren nach Anspruch 1, bei dem die Energieeintragsparameterwerte im Strahlungseinwirkbereich am Endpunkt (64E, 65E) einer Verfestigungsbahn (64, 65) so festgelegt werden, dass bei der Einwirkung der Strahlung auf das Aufbaumaterial ein Wärmeleitungsschweißprozess stattfindet, wobei an zumindest einer anderen Stelle der Verfestigungsbahn (64, 65) bei der Einwirkung der Strahlung auf das Aufbaumaterial ein Tiefschweißprozess stattfindet.

4. Verfahren nach Anspruch 3, bei dem die Energieeintragsparameterwerte im Strahlungseinwirkbereich innerhalb eines an den Endpunkt (64E, 65E) angrenzenden Abschnitts (642, 652) der Verfestigungsbahn (64, 65) so festgelegt werden, dass bei der Einwirkung der Strahlung auf das Aufbaumaterial ein Wärmeleitungsschweißprozess stattfindet, wobei vorzugsweise eine maximale Ausdehnung des Abschnitts höchstens dem Zwanzigfachen der maximalen Ausdehnung des Strahlungseinwirkbereichs entspricht, weiter bevorzugt höchstens dem Zehnfachen, noch weiter bevorzugt höchstens dem Fünffachen, besonders bevorzugt höchstens dem Doppelten der maximalen Ausdehnung des Strahlungseinwirkbereichs entspricht.

5. Verfahren nach einem der vorangehenden Ansprüche, bei dem für den Endpunkt (64E, 65E) und/oder einen an den Endpunkt angrenzenden Abschnitt (642, 652) der zumindest einen Verfestigungsbahn (64, 65) eine größere oder gleiche maximale Ausdehnung des Strahlungseinwirkbereichs senkrecht zur Bewegungsrichtung des Strahlbündels als an den anderen Stellen der Verfestigungsbahn (64, 65) spezifiziert wird und/oder eine andere Verteilung der Strahlungsintensität pro Flächeneinheit innerhalb des Strahlungseinwirkbereichs, insbesondere ein größerer Wert des Verhältnisses der Strahlungsleistung pro Flächeneinheit am Rande des Strahlungseinwirkbereichs zur Strahlungsleistung pro Flächeneinheit in der Mitte des Strahlungseinwirkbereichs spezifiziert wird als an den anderen Stellen der Verfestigungsbahn.

6. Verfahren nach einem der vorangehenden Ansprüche, bei dem am Endpunkt (64E, 65E) und/oder innerhalb eines an den Endpunkt angrenzenden Abschnitts (642, 652) der zumindest einen Verfestigungsbahn (64, 65) das Strahlbündel in der Arbeitsebene eine periodische oder unregelmäßige Bewegung einer Amplitude ausführt, die geringer als das Fünffache, vorzugsweise geringer als das Dreifache, besonders bevorzugt geringer als das Doppelte einer maximalen Ausdehnung des Strahlungseinwirkbereichs in der Arbeitsebene ist.

7. Verfahren nach einem der vorangehenden Ansprüche, bei dem die Energieeintragsparameterwerte des Strahlbündels für einen Zeitraum unmittelbar nach dem Richten des Strahlbündels auf den Endpunkt (64E, 65E) der Verfestigungsbahn (64, 65) so spezifiziert werden, dass ein Referenzwert für die Strahlungsleistung pro Flächeneinheit im Strahlungseinwirkbereich des Strahlbündels auf dem Aufbaumaterial kleiner oder gleich 50%, bevorzugt kleiner oder gleich 20%, noch bevorzugter kleiner oder gleich 10%, noch weiter bevorzugt kleiner oder gleich 5% des Referenzwerts für die Strahlungsleistung pro Flächeneinheit am Endpunkt (64E, 65E) beträgt.

8. Verfahren nach einem der vorangehenden Ansprüche, bei dem die Energieeintragsparameterwerte so spezifiziert werden, dass innerhalb des an den Endpunkt (64E, 65E) angrenzenden Abschnitts der Verfestigungsbahn (642, 652) der Referenzwert für die Strahlungsleistung pro Flächeneinheit im Strahlungseinwirkbereich des Strahlbündels abnimmt.

9. Verfahren nach einem der vorangehenden Ansprüche, bei dem das Strahlbündel so auf die Verfestigungsbahn gerichtet wird, dass die Geschwindigkeit der Bewegung des Strahlungseinwirkbereichs des Strahlbündels in der Arbeitsebene innerhalb eines an einen Anfangspunkt (64A, 65A) angrenzenden Abschnitts (641, 651) der Verfestigungsbahn um mindestens 10%, bevorzugter um mindestens 100%, noch bevorzugter um mindestens 1000% zunimmt und/oder innerhalb des an den Endpunkt (64E, 65E) angrenzenden (642, 652) Abschnitts der Verfestigungsbahn um mindestens 20%, bevorzugter um mindestens 50%, noch bevorzugter um mindestens 80%, abnimmt.

10. Verfahren nach einem der vorangehenden Ansprüche, bei dem die Geschwindigkeit der Bewegung des Strahlungseinwirkbereichs des Strahlbündels in der Arbeitsebene innerhalb eines an einen Anfangspunkt (64A, 65A) angrenzenden Abschnitts (641, 651) der Verfestigungsbahn und/oder innerhalb des an den Endpunkt (64E, 65E) angrenzenden Abschnitts (642, 652) der Verfestigungsbahn so zusammen mit dem Referenzwert für die Strahlungsleistung pro Flächeneinheit im Strahlungseinwirkbereich variiert wird, dass zumindest an einer Stelle die prozentuale Änderung des Referenzwerts für die Strahlungsleistung pro Flächeneinheit pro Zeiteinheit größer ist als die prozentuale Änderung der Geschwindigkeit der Bewegung pro Zeiteinheit.

11. Additives Herstellverfahren zur Herstellung eines dreidimensionalen Objekts, wobei das Objekt mittels einer additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparameterwerten entlang einer Anzahl von Verfestigungsbahnen abgetastet werden, wobei sich eine Verfestigungsbahn zwischen einem Anfangspunkt und einem Endpunkt erstreckt, und außerhalb der Verfestigungsbahn höchstens so viel Energie eingetragen wird, dass das Aufbaumaterial zwar erwärmt wird, aber keine Verfestigung bewirkt wird
wobei der Ablauf des additiven Herstellverfahrens durch einen Steuerdatensatz gesteuert wird, der unter Verwendung eines Verfahrens nach einem der Ansprüche 1 bis 10 generiert wurde.

12. Vorrichtung zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparameterwerten entlang einer Anzahl von Verfestigungsbahnen abgetastet werden, wobei sich eine Verfestigungsbahn zwischen einem Anfangspunkt und einem Endpunkt erstreckt, und außerhalb der Verfestigungsbahn höchstens so viel Energie eingetragen wird, dass das Aufbaumaterial zwar erwärmt wird, aber keine Verfestigung bewirkt wird,
wobei die Vorrichtung zur Bereitstellung von Steuerdaten aufweist:
eine Datenzugriffseinheit (101), die ausgelegt ist zum Zugriff auf computerbasierte Modelldaten zumindest eines Abschnitts des herzustellenden Objekts,
eine Datenmodell-Erzeugungseinheit (102), die ausgelegt ist, zumindest ein Datenmodell eines zur Herstellung des zumindest einen Objektabschnitts selektiv zu verfestigenden Bereichs einer Aufbaumaterialschicht zu erzeugen, wobei in dem Datenmodell ein Verfestigen des Aufbaumaterials durch Bewegen zumindest eines Strahlbündels entlang zumindest einer Verfestigungsbahn spezifiziert ist,
wobei beim Richten des zumindest einen Strahlbündels auf den Endpunkt (64E, 65E) der zumindest einen Verfestigungsbahn (64, 65) ein Satz von Energieeintragsparameterwerten spezifiziert ist, der einen Referenzwert für die Strahlungsleistung pro Flächeneinheit im Strahlungseinwirkbereich des Strahlbündels auf dem Aufbaumaterial bewirkt, welcher geringer ist als der Referenzwert für die Strahlungsleistung pro Flächeneinheit an anderen Stellen der Verfestigungsbahn (64, 65), und
eine Steuerdaten-Bereitstellungseinheit (103), die ausgelegt ist, Steuerdaten entsprechend dem durch die Datenmodell-Erzeugungseinheit (102) erzeugten zumindest einen Datenmodell für die Generierung eines Steuerdatensatzes für die additive Herstellvorrichtung bereit zu stellen.

13. Vorrichtung zur computergestützten Ansteuerung einer Anzahl von Energieeintragseinrichtungen einer additiven Herstellvorrichtung zur Herstellung eines dreidimensionalen Objekts mittels derselben,
wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparametern entlang einer Anzahl von Verfestigungsbahnen abgetastet werden, wobei sich eine Verfestigungsbahn zwischen einem Anfangspunkt und einem Endpunkt erstreckt, und außerhalb der Verfestigungsbahn höchstens so viel Energie eingetragen wird, dass das Aufbaumaterial zwar erwärmt wird, aber keine Verfestigung bewirkt wird
**gekennzeichnet dadurch, dass**
die Vorrichtung so ausgelegt ist, dass ein Verfestigen des Aufbaumaterials durch Bewegen zumindest eines Strahlbündels entlang zumindest einer Verfestigungsbahn so stattfindet, dass für den Endpunkt (64E, 65E) der zumindest einen Verfestigungsbahn (64, 65) ein Satz von Energieeintragsparameterwerten spezifiziert ist, der einen Referenzwert für die Strahlungsleistung pro Flächeneinheit im Strahlungseinwirkbereich des Strahlbündels auf dem Aufbaumaterial bewirkt, welcher geringer ist als der Referenzwert für die Strahlungsleistung pro Flächeneinheit an anderen Stellen der Verfestigungsbahn (64, 65).

14. Additive Herstellvorrichtung zur Herstellung eines dreidimensionalen Objekts, wobei in der additiven Herstellvorrichtung das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlbündel gemäß einem Satz von Energieeintragsparametern entlang einer Anzahl von Verfestigungsbahnen abgetastet werden, wobei die additive Herstellvorrichtung aufweist:
eine Schichtaufbringvorrichtung (16), die geeignet ist, eine Schicht eines Aufbaumaterials auf eine bereits vorhandene, bevorzugt bereits selektiv verfestigte, Aufbaumaterialschicht aufzubringen,
eine Energieeintragseinrichtung (20), die geeignet ist, dem Querschnitt des Objekts in einer Schicht zugeordneten Stellen Strahlungsenergie zuzuführen, indem diese Stellen mit mindestens einem Strahlbündel (22) gemäß einem Satz von Energieeintragsparameterwerten entlang einer Anzahl von Verfestigungsbahnen abgetastet werden, wobei sich eine Verfestigungsbahn zwischen einem Anfangspunkt und einem Endpunkt erstreckt, und außerhalb der Verfestigungsbahn höchstens so viel Energie eingetragen wird, dass das Aufbaumaterial zwar erwärmt wird, aber keine Verfestigung bewirkt wird,
wobei die additive Herstellvorrichtung eine Vorrichtung nach Anspruch 13 aufweist und/oder mit einer Vorrichtung nach Anspruch 13 signaltechnisch verbunden ist.

15. Computerprogramm, mit Programmcodemitteln, um alle Schritte eines Verfahrens gemäß einem der Ansprüche 1 bis 10 auszuführen, wenn das Computerprogramm mittels eines Datenprozessors, insbesondere eines mit einer additiven Herstellvorrichtung zusammenwirkenden Datenprozessors, ausgeführt wird.

## Claims

1. A computer-aided method for providing control data to an additive manufacturing device for manufacturing a three-dimensional object, wherein the object is manufactured by means of the additive manufacturing device by applying a building material layer by layer and by solidifying the building material by supplying radiation energy to locations in each layer assigned to the cross-section of the object in that layer by scanning these locations with at least one beam bundle according to a set of energy introduction parameter values along a number of solidification paths, wherein a solidification path extends between a starting point and an end point, and wherein at the most as much energy is introduced outside of the solidification path that the building material is heated but no solidification is caused, the method for providing control data comprising:
a first step (S1) of accessing computer-based model data of at least a portion of the object to be manufactured,
a second step (S2) of generating at least one data model of a region of a building material layer to be selectively solidified for manufacturing said at least one object portion, wherein the data model specifies solidification of the building material by moving at least one beam bundle along at least one solidification path (64, 65),
wherein a set of energy introduction parameter values is specified for the end point (64E, 65E) of the at least one solidification path (64, 65), said set of energy introduction parameter values causing a reference value for the radiation power per unit area in the radiation impact area of the beam bundle on the building material which is lower than the reference value for the radiation power per unit area at other locations of the solidification path (64, 65), and
a third step (S3) in which control data corresponding to the at least one data model generated in the second step (S2) are provided for generating a control data set for the additive manufacturing device.

2. Method according to claim 1, wherein the reference value for the radiation power per unit area in the radiation impact area on the building material at the end point (64E, 65E) of a solidification path (64, 65) is less than or equal to 50%, preferably less than or equal to 20%, even more preferably less than or equal to 10%, even more preferably less than or equal to 5%, still more preferably maximally 3%, still more preferably maximally 2% of the reference value for the radiation power per unit area at the other locations of the solidification path.

3. Method according to claim 1, wherein the energy introduction parameter values in the radiation impact area at the end point (64E, 65E) of a solidification path (64, 65) are determined in such a way that a heat conduction welding process takes place when the radiation acts on the building material, wherein a deep penetration welding process takes place at at least one other location of the solidification path (64, 65) when the radiation acts on the building material.

4. Method according to claim 3, in which the energy introduction parameter values in the radiation impact area within a section (642, 652) of the solidification path (64, 65) adjacent to the end point (64E, 65E) are determined in such a way that a heat conduction welding process takes place when the radiation acts on the building material, wherein preferably a maximum extension of the section corresponds to at most twenty times the maximum extension of the radiation impact area, more preferably at most ten times, still more preferably at most five times, particularly preferably at most twice the maximum extension of the radiation impact area.

5. Method according to one of the preceding claims, wherein for the end point (64E, 65E) and/or a section (642, 652) of the at least one solidification path (64, 65) adjoining the end point, a greater or equal maximum extension of the radiation impact area perpendicular to the direction of movement of the beam bundle than at the other locations of the solidification path (64, 65), 65) is specified and/or a different distribution of radiation intensity per unit area within the radiation impact area, in particular a larger value of the ratio of the radiation power per unit area at the edge of the radiation impact area to the radiation power per unit area in the middle of the radiation impact area is specified than at the other locations of the solidification path.

6. Method according to one of the preceding claims, wherein at the end point (64E, 65E) and/or within a section (642, 652) of the at least one solidification path (64, 65) adjacent to the end point the beam bundle performs a periodic or irregular movement in the working plane having an amplitude which is less than five times, preferably less than three times, particularly preferably less than twice a maximum extension of the radiation impact area in the working plane.

7. Method according to one of the preceding claims, wherein the energy introduction parameter values of the beam bundle are specified for a period immediately after the beam is directed to the end point (64E, 65E) of the solidification path (64, 65), so that a reference value for the radiation power per unit area in the radiation impact area of the beam bundle on the building material is less than or equal to 50%, preferably less than or equal to 20%, even more preferably less than or equal to 10%, even more preferably less than or equal to 5% of the reference value for the radiation power per unit area at the end point (64E, 65E).

8. Method according to one of the preceding claims, wherein the energy introduction parameter values are specified in such a way that within the section of the solidification path (642, 652) adjacent to the end point (64E, 65E) the reference value for the radiation power per unit area decreases in the radiation impact area of the beam bundle.

9. Method according to one of the preceding claims, wherein the beam bundle is directed onto the solidification path so that the speed of movement of the radiation impact area of the beam bundle in the working plane within a section (641, 651) adjacent to a starting point (64A, 65A) of the solidification path increases by at least 10%, more preferably by at least 100%, even more preferably by at least 1000% and/or decreases within the section (642, 652) of the solidification path adjacent to the end point (64E, 65E) by at least 20%, more preferably by at least 50%, even more preferably by at least 80%.

10. Method according to one of the preceding claims, wherein the speed of movement of the radiation impact area of the beam bundle in the working plane within a section (641, 651) of the solidification path adjacent to a starting point (64A, 65A) and/or within the section (642, 652) adjacent to the end point (64E, 65E), of the solidification path is varied together with the reference value for the radiation power per unit area in the radiation impact area in such a way that at least at one location the percentage change in the reference value for the radiation power per unit area per unit time is greater than the percentage change in the speed of the movement per unit time.

11. Additive manufacturing method for the manufacturing of a three-dimensional object, wherein the object is manufactured by means of an additive manufacturing device by applying a building material layer by layer and by solidifying the building material by supplying radiation energy to locations in each layer assigned to the cross-section of the object in that layer by scanning said locations with at least one beam bundle according to a set of energy introduction parameter values along a number of solidification paths, wherein a solidification path extends between a starting point and an end point, and wherein at the most as much energy is introduced outside of the solidification path that the building material is heated but no solidification is caused,
wherein the process of the additive manufacturing method is controlled by a control data set generated using a method according to one of claims 1 to 10.

12. Device for providing control data for an additive manufacturing device for manufacturing a three-dimensional object, wherein the object is manufactured by means of the additive manufacturing device by applying a building material layer by layer and by solidifying the building material by supplying radiation energy to locations in each layer assigned to the cross-section of the object in that layer by scanning these locations with at least one beam bundle according to a set of energy introduction parameter values along a number of solidification paths, wherein a solidification path extends between a starting point and an end point, and wherein at the most as much energy is introduced outside of the solidification path that the building material is heated but no solidification is caused,
wherein the device for providing control data comprises:
a data access unit (101) adapted to access computer-based model data of at least a portion of the object to be manufactured,
a data model generating unit (102) adapted to generate at least one data model of a region of a building material layer to be selectively solidified for manufacturing the at least one object portion, wherein solidification of the building material by moving at least one beam bundle along at least one solidification path is specified in the data model,
wherein, when directing the at least one beam bundle onto the end point (64E, 65E) of the at least one solidification path (64, 65), a set of energy introduction parameter values is specified which causes a reference value for the radiation power per unit area in the radiation impact area of the beam bundle on the building material which is lower than the reference value for the radiation power per unit area at other locations of the solidification path (64, 65), and
a control data providing unit (103) adapted to provide control data corresponding to the at least one data model generated by the data model generating unit (102) for generating a control data set for the additive manufacturing device.

13. Device for computer-aided control of a number of energy introduction devices of an additive manufacturing device for manufacturing a three-dimensional object by means thereof,
wherein the object is manufactured by means of the additive manufacturing device by applying a building material layer by layer and by solidifying the building material by supplying radiation energy to locations in each layer assigned to the cross-section of the object in that layer by scanning those locations with at least one beam bundle according to a set of energy introduction parameters along a number of solidification paths, wherein a solidification path extends between a starting point and an end point, and wherein at the most as much energy is introduced outside of the solidification path that the building material is heated but no solidification is caused,
**characterized in that** the device is adapted to solidify the building material by moving at least one beam bundle along at least one solidification path so that a set of energy introduction parameter values is specified for the end point (64E, 65E) of the at least one solidification path (64, 65), which causes a reference value for the radiation power per unit area in the radiation impact area of the beam bundle on the building material which is lower than the reference value for the radiation power per unit area at other locations of the solidification path (64, 65).

14. Additive manufacturing device for manufacturing a three-dimensional object, in which additive manufacturing device the object is manufactured by applying a building material layer by layer and by solidifying the building material by supplying radiation energy to locations in each layer assigned to the cross-section of the object in that layer by scanning these locations with at least one beam bundle according to a set of energy introduction parameters along a number of solidification paths, the additive manufacturing device comprising:
a layer application device (16) adapted to apply a layer of building material to an already existing, preferably already selectively solidified, building material layer,
an energy introduction device (20) adapted to supply radiation energy to locations assigned to the cross-section of the object in a layer by scanning said locations with at least one beam bundle (22) according to a set of energy introduction parameter values along a number of solidification paths, wherein a solidification path extends between a starting point and an end point, and wherein at the most as much energy is introduced outside of the solidification path that the building material is heated but no solidification is caused,
wherein the additive manufacturing device comprises a device according to claim 13 and/or is connected to a device according to claim 13 in terms of signal technology.

15. Computer program, comprising program code means for executing all the steps of a method according to one of claims 1 to 10 when the computer program is executed by means of a data processor, in particular a data processor cooperating with an additive manufacturing device.

## Revendications

1. Procédé assisté par ordinateur pour fournir des données de commande pour un appareil de fabrication additive pour fabriquer un objet tridimensionnel, où l'objet est fabriqué au moyen de l'appareil de fabrication additive en appliquant un matériau de construction couche par couche et en solidifiant le matériau de construction en fournissant de l'énergie de rayonnement à des positions dans chaque couche qui sont associées à la section transversale de l'objet dans cette couche en balayant ces positions avec au moins un faisceau de rayonnement selon un ensemble de valeurs de paramètre d'introduction d'énergie le long d'un certain nombre de trajectoires de solidification, où une trajectoire de solidification s'étend entre un point de départ et un point final, et en entrant au plus autant d'énergie à l'extérieur de la trajectoire de solidification que le matériau de construction est chauffé mais qu'aucune solidification n'est effectuée, le procédé pour fournir des données de commande comprenant :
une première étape (S1) d'accès à des données de modèle de type informatique d'au moins une partie de l'objet à fabriquer,
une deuxième étape (S2) de génération d'au moins un modèle de données d'une zone d'une couche de matériau de construction à solidifier sélectivement pour fabriquer l'au moins une partie d'objet, où une solidification du matériau de construction en déplaçant au moins un faisceau de rayonnement le long d'au moins une trajectoire de solidification (64, 65) est spécifiée dans le modèle de données,
où, pour le point final (64E, 65E) de l'au moins une trajectoire de solidification (64, 65), un ensemble de valeurs de paramètre d'introduction d'énergie est spécifié qui provoque une valeur de référence pour la puissance de rayonnement par unité de surface dans la zone d'impact de rayonnement du faisceau de rayonnement sur le matériau de construction qui est inférieure à la valeur de référence pour la puissance de rayonnement par unité de surface à d'autres positions de la trajectoire de solidification (64, 65), et
une troisième étape (S3) dans laquelle des données de commande correspondant à l'au moins un modèle de données généré dans la deuxième étape (S2) sont fournies pour générer un ensemble de données de commande pour l'appareil de fabrication additive.

2. Procédé selon la revendication 1, dans lequel la valeur de référence pour la puissance de rayonnement par unité de surface dans la zone d'impact de rayonnement sur le matériau de construction au point final (64E, 65E) d'une trajectoire de solidification (64, 65) est inférieure ou égale à 50 %, de préférence inférieure ou égale à 20 %, encore plus préférablement inférieure ou égale à 10 %, encore plus préférablement inférieure ou égale à 5 %, encore plus préférablement au maximum 3 %, encore plus préférablement au maximum 2 % de la valeur de référence pour la puissance de rayonnement par unité de surface aux autres positions de la trajectoire de solidification.

3. Procédé selon la revendication 1, dans lequel les valeurs de paramètre d'introduction d'énergie dans la zone d'impact de rayonnement au point final (64E, 65E) d'une trajectoire de solidification (64, 65) sont déterminées de telle sorte que, lors de l'impact du rayonnement sur le matériau de construction, un processus de soudage par conduction thermique a lieu, où, à au moins une autre position de la trajectoire de solidification (64, 65), un processus de soudage profond a lieu lors de l'impact du rayonnement sur le matériau de construction.

4. Procédé selon la revendication 3, dans lequel les valeurs de paramètre d'introduction d'énergie dans la zone d'impact de rayonnement à l'intérieur d'une section (642, 652) de la trajectoire de solidification (64, 65) adjacente au point final (64E, 65E) sont déterminées de telle sorte que, lors de l'impact du rayonnement sur le matériau de construction, un processus de soudage par conduction thermique a lieu, où, de préférence, une extension maximale de la section correspond au maximum à vingt fois l'extension maximale de la zone d'impact de rayonnement, encore plus préférablement au maximum à dix fois, encore plus préférablement au maximum à cinq fois, particulièrement préférablement au maximum au double de l'extension maximale de la zone d'impact de rayonnement.

5. Procédé selon l'une des revendications précédentes, dans lequel, pour le point final (64E, 65E) et/ou une section (642, 652) de l'au moins une trajectoire de solidification (64, 65) adjacente au point final, une extension maximale plus grande ou égale de la zone d'impact de rayonnement perpendiculairement à la direction de déplacement du faisceau de rayonnement qu'aux autres positions de la trajectoire de solidification (64, 65) est spécifiée, et/ou une autre répartition de l'intensité de rayonnement par unité de surface à l'intérieur de la zone d'impact de rayonnement, en particulier une valeur plus grande du rapport de la puissance de rayonnement par unité de surface au bord de la zone d'impact de rayonnement à la puissance de rayonnement par unité de surface au milieu de la zone d'impact de rayonnement qu'aux autres positions de la trajectoire de solidification est spécifiée.

6. Procédé selon l'une des revendications précédentes, dans lequel, au point final (64E, 65E) et/ou à l'intérieur d'une section (642, 652) de l'au moins une trajectoire de solidification (64, 65) adjacente au point final, le faisceau de rayonnement effectue dans le plan de travail un déplacement périodique ou irrégulier d'une amplitude qui est inférieure à cinq fois, de préférence inférieure à trois fois, particulièrement préférablement inférieure au double d'une extension maximale de la zone d'impact de rayonnement dans le plan de travail.

7. Procédé selon l'une des revendications précédentes, dans lequel les valeurs de paramètre d'introduction d'énergie du faisceau de rayonnement sont spécifiées pour une période de temps immédiatement après de diriger le faisceau de rayonnement sur le point final (64E, 65E) de la trajectoire de solidification (64, 65) de sorte qu'une valeur de référence pour la puissance de rayonnement par unité de surface dans la zone d'impact de rayonnement du faisceau de rayonnement sur le matériau de construction soit inférieure ou égale à 50 %, de préférence inférieure ou égale à 20 %, encore plus préférablement inférieure ou égale à 10 %, encore plus préférablement inférieure ou égale à 5 % de la valeur de référence pour la puissance de rayonnement par unité de surface au point final (64E, 65E).

8. Procédé selon l'une des revendications précédentes, dans lequel les valeurs de paramètre d'introduction d'énergie sont spécifiées de sorte qu'à l'intérieur de la section de la trajectoire de solidification (642, 652) adjacente au point final (64E, 65E), la valeur de référence pour la puissance de rayonnement par unité de surface dans la zone d'impact de rayonnement du faisceau de rayonnement diminue.

9. Procédé selon l'une des revendications précédentes, dans lequel le faisceau de rayonnement est dirigé sur la trajectoire de solidification de sorte que la vitesse du déplacement de la zone d'impact de rayonnement du faisceau de rayonnement dans le plan de travail à l'intérieur d'une section (641, 651) de la trajectoire de solidification adjacente à un point de départ (64A, 65A) augmente d'au moins 10 %, plus préférablement d'au moins 100 %, encore plus préférablement d'au moins 1000 % et/ou diminue à l'intérieur de la section de la trajectoire de solidification adjacente au point final (64E, 65E) (642, 652) d'au moins 20 %, plus préférablement d'au moins 50 %, encore plus préférablement d'au moins 80 %.

10. Procédé selon l'une des revendications précédentes, dans lequel la vitesse du déplacement de la zone d'impact de rayonnement du faisceau de rayonnement dans le plan de travail à l'intérieur d'une section (641, 651) de la trajectoire de solidification adjacente à un point de départ (64A, 65A) et/ou à l'intérieur de la section (642, 652) de la trajectoire de solidification adjacente au point final (64E, 65E) est variée conjointement avec la valeur de référence pour la puissance de rayonnement par unité de surface dans la zone d'impact de rayonnement de sorte qu'au moins à une position, la variation en pourcentage de la valeur de référence pour la puissance de rayonnement par unité de surface par unité de temps soit supérieure à la variation en pourcentage de la vitesse du déplacement par unité de temps.

11. Procédé de fabrication additive pour fabriquer un objet tridimensionnel, où l'objet est fabriqué au moyen d'un appareil de fabrication additive en appliquant un matériau de construction couche par couche et en solidifiant le matériau de construction en fournissant de l'énergie de rayonnement à des positions dans chaque couche qui sont associées à la section transversale de l'objet dans cette couche en balayant ces positions avec au moins un faisceau de rayonnement selon un ensemble de valeurs de paramètre d'introduction d'énergie le long d'un certain nombre de trajectoires de solidification, où une trajectoire de solidification s'étend entre un point de départ et un point final, et en entrant au plus autant d'énergie à l'extérieur de la trajectoire de solidification que le matériau de construction est chauffé mais qu'aucune solidification n'est effectuée,
où le déroulement du procédé de fabrication additive est commandé par un ensemble de données de commande qui a été généré en utilisant un procédé selon l'une des revendications 1 à 10.

12. Appareil pour fournir des données de commande pour un appareil de fabrication additive pour fabriquer un objet tridimensionnel, où l'objet est fabriqué au moyen de l'appareil de fabrication additive en appliquant un matériau de construction couche par couche et en solidifiant le matériau de construction en fournissant de l'énergie de rayonnement à des positions dans chaque couche qui sont associées à la section transversale de l'objet dans cette couche en balayant ces positions avec au moins un faisceau de rayonnement selon un ensemble de valeurs de paramètre d'introduction d'énergie le long d'un certain nombre de trajectoires de solidification, où une trajectoire de solidification s'étend entre un point de départ et un point final, et en entrant au plus autant d'énergie à l'extérieur de la trajectoire de solidification que le matériau de construction est chauffé mais qu'aucune solidification n'est effectuée, l'appareil pour fournir des données de commande comprenant :
une unité d'accès de données (101) qui est conçue pour accéder à des données de modèle de type informatique d'au moins une partie de l'objet à fabriquer,
une unité de génération de modèle de données (102) qui est conçue pour générer au moins un modèle de données d'une zone d'une couche de matériau de construction à solidifier sélectivement pour fabriquer l'au moins une partie d'objet, où une solidification du matériau de construction en déplaçant au moins un faisceau de rayonnement le long d'au moins une trajectoire de solidification est spécifiée dans le modèle de données,
où, lors de diriger l'au moins un faisceau de rayonnement vers le point final (64E, 65E) de l'au moins une trajectoire de solidification (64, 65), un ensemble de valeurs de paramètre d'introduction d'énergie est spécifié qui provoque une valeur de référence pour la puissance de rayonnement par unité de surface dans la zone d'impact de rayonnement du faisceau de rayonnement sur le matériau de construction qui est inférieure à la valeur de référence pour la puissance de rayonnement par unité de surface à d'autres positions de la trajectoire de solidification (64, 65), et
une unité de fourniture de données de commande (103) qui est conçue pour fournir des données de commande correspondant à l'au moins un modèle de données généré par l'unité de génération de modèle de données (102) pour générer un ensemble de données de commande pour l'appareil de fabrication additive.

13. Appareil de commande assistée par ordinateur d'un certain nombre de dispositifs d'introduction d'énergie d'un appareil de fabrication additive pour fabriquer un objet tridimensionnel au moyen de ceux-ci,
où l'objet est fabriqué au moyen de l'appareil de fabrication additive en appliquant un matériau de construction couche par couche et en solidifiant le matériau de construction en fournissant de l'énergie de rayonnement à des positions dans chaque couche qui sont associées à la section transversale de l'objet dans cette couche en balayant ces positions avec au moins un faisceau de rayonnement selon un ensemble de paramètres d'introduction d'énergie le long d'un certain nombre de trajectoires de solidification, où une trajectoire de solidification s'étend entre un point de départ et un point final, et en entrant au plus autant d'énergie à l'extérieur de la trajectoire de solidification que le matériau de construction est chauffé mais qu'aucune solidification n'est effectuée,
**caractérisé en ce que**
l'appareil est conçu de sorte qu'une solidification du matériau de construction en déplaçant au moins un faisceau de rayonnement le long d'au moins une trajectoire de solidification a lieu de sorte que, pour le point final (64E, 65E) de l'au moins une trajectoire de solidification (64, 65), un ensemble de valeurs de paramètre d'introduction d'énergie est spécifié qui provoque une valeur de référence pour la puissance de rayonnement par unité de surface dans la zone d'impact de rayonnement du faisceau de rayonnement sur le matériau de construction qui est inférieure à la valeur de référence pour la puissance de rayonnement par unité de surface à d'autres positions de la trajectoire de solidification (64, 65).

14. Appareil de fabrication additive pour fabriquer un objet tridimensionnel, où, dans l'appareil de fabrication additive, l'objet est fabriqué en appliquant un matériau de construction couche par couche et en solidifiant le matériau de construction en fournissant de l'énergie de rayonnement à des positions dans chaque couche qui sont associées à la section transversale de l'objet dans cette couche en balayant ces positions avec au moins un faisceau de rayonnement selon un ensemble de paramètres d'introduction d'énergie le long d'un certain nombre de trajectoires de solidification, l'appareil de fabrication additive comprenant :
un appareil d'application de couche (16) qui est adapté pour appliquer une couche d'un matériau de construction sur une couche de matériau de construction déjà présent, de préférence déjà solidifié sélectivement,
un dispositif d'introduction d'énergie (20) qui est adapté pour fournir de l'énergie de rayonnement à des positions associées à la section transversale de l'objet dans une couche en balayant ces positions avec au moins un faisceau de rayonnement (22) selon un ensemble de valeurs de paramètre d'introduction d'énergie le long d'un certain nombre de trajectoires de solidification, où une trajectoire de solidification s'étend entre un point de départ et un point final, et en entrant au plus autant d'énergie à l'extérieur de la trajectoire de solidification que le matériau de construction est chauffé mais qu'aucune solidification n'est effectuée,
où l'appareil de fabrication additive comprend un appareil selon la revendication 13 et/ou est relié par une technique de signalisation à un appareil selon la revendication 13.

15. Programme informatique comprenant des moyens de code de programme pour exécuter toutes les étapes d'un procédé selon l'une des revendications 1 à 10 lorsque le programme informatique est exécuté au moyen d'un processeur de données, en particulier d'un processeur de données coopérant avec un appareil de fabrication additive.
